# EUROPEAN PATENT APPLICATION

(11) **EP 3 944 001 A1**
(43) Date of publication of application: **26.01.2022**
(21) Application number: 20187788.3
(22) Date of filing: 24.07.2020
(51) Int. Cl.: G02C 1/00

(54) **SPECTACLE LENS WITH EDGE SEALING AND METHOD FOR MANUFACTURING THE SAME**

(71) Applicant: Carl Zeiss Vision International GmbH, 73430 Aalen (DE)
(72) Inventor: Glöge, Thomas, 73614 Schorndorf (DE); Christmann, Michel-Rene, 73433 Aalen (DE)
(74) Representative: Carl Zeiss AG - Patentabteilung

(57) **Abstract**

The present invention relates to a spectacle lens comprising a sealed edge surface and a method for manufacturing the same.

## Description

The present invention relates to an edged lens comprising a sealed edge surface and a method for manufacturing the same.

WO 02/27359 A1 discloses a spectacle lens having a front and back surface, each surface preferably being coated with an external coating such as a hard coating or an anti-reflection coating. The front and back surface is bound by a peripheral edge, the peripheral edge being coated with an edge coating that strongly bonds to the edge but that only weakly bonds to the front and back surface. Any edge coating that is applied to the front and back surface may simply wiped off therefrom or otherwise easily removed. Preferably, the edge coating is based on a UV curable edge coating material. The edge coating may be coloured for fashion purposes. Due to the edge coating an edge polishing step to provide cosmetically acceptable lens edges is not necessary. According to WO 02/27359 A1 the edge coating provides a spectacle with an acceptable edge seal to prevent the ingression of moisture and to protect the edge against chemical attack.

WO 2019/179791 A1 discloses a spectacle lens which has, on its outer edge and/or on its front or rear surface at least one functional layer, the at least one functional layer being formed by a substance that is applied in liquid form to the edge and/or the front or rear surface and is integrally bonded to the glass. The at least one functional layer is chemically curable or radiation-curable. Further, the at least one functional layer should have an optical function, a magnetic function, an electrical or electronic function.

A finished lens, i.e. according to DIN EN ISO 13666:2019-12, section 3.8.7, a lens of which both sides have their final optical surface, can be either edged (cut) or uncut. An edged lens is according to DIN EN ISO 13666:2019-12, section 3.8.9, a finished lens edged to the final size and shape. The edging, i.e. according to DIN EN ISO 13666:2019-12, section 3.8.10, the process in which the edge of the uncut lens is profiled to the required finished size and shape and with the desired edge form, e.g. flat or beveled, stresses the coating of an uncut lens. An uncut lens or uncut finished lens is according to DIN EN ISO 13666:2019-12, section 3.8.8, a finished lens prior to edging. In particular a hard coating, an antireflective coating and/or a multilayer mirror coating of a spectacle lens is/are mechanically stressed during edging, thus resulting in defects such as cracks, fissures, abrasion, complete or partial delamination or flaking of the respective coating, especially next to the edge of the edged lens. In case of a multilayer antireflective coating or a multilayer mirror coating, at least one layer or all layers of the respective multilayer coating may be delaminated or flaked. The before mentioned defects may affect the long-term stability and durability of the spectacle lens. Further, these defects beginning from the edge of the edged lens may propagate over the front surface, which is according to DIN EN ISO 13666:2019-12, section 3.2.13, the surface of the lens intended to be fitted away from the eye, and/or over the back surface, which is according to DIN EN ISO 13666:2019-12, section 3.2.14, the surface of the lens intended to be fitted nearer to the eye. In contact with pH acidic substances of everyday life further defects such as warping of the coating or the spectacle lens substrate may occur resulting in irreversible defects.
The edge, edge surface or bevel each as surface between the front surface and the back surface of an edged lens is not necessarily encompassed completely by a spectacle frame, either due to the type of spectacle frame or due to the edge thickness of the spectacle lens. Therefore, the concentration of microorganisms on the edge surface might be much higher compared to their concentration on the front surface and/or on the back surface of an edged lens. Furthermore, the surface roughness of the edge surface usually is higher than the surface roughness of a finished uncoated front surface, a coated front surface, a finished uncoated back and/or a coated back surface each of an edged lens. For clear vision surface contaminations of the front surface or the back surface needs to be removed, surface contaminations of the exposed edge surface, i.e. the edge surface being not encompassed completely by the spectacle frame, or surface contaminations in the transition of the exposed edge surface and the spectacle frame either might be not easily removable or might be overlooked when the pair of spectacles is cleaned. In combination with the surface roughness of the edge surface, the surface contaminations on the edge surface provide good growth conditions for microorganisms.

Several different spectacle frame types are available, which differentiate by frame material and form. The most important materials are metal, often Monel or titanium alloys, or polymer, often cellulose acetate. The form of the spectacle frame can for instance be a full rim, half rim or nylor as well as rimless. Each type influences the potential of the spectacle frame or of the spectacle lens to get into contact with the human skin, which again has impact on the speed and easiness of contamination with substances or microorganisms readily available on the human skin. Additionally, the full rim variations of spectacle frames reduce the accessibility of the edge during the cleaning process and increase the potential for long term growth of microorganisms. In case of rimless frames, the issues associated with contamination and cleaning are reduced at the actual outer rim of the spectacle lens due to the easy access but shifted to the holes required to hold the nose bridge as well as side pieces. The potential of contamination by skin contact is not only affected by the spectacle frame type but also by the optical power of the spectacle lens itself. Plus-power lenses, according to DIN EN ISO 13666:2019-12, section 3.10.17, lenses that cause parallel incident light to converge to a real focus, typically worn by a hyperopic wearer, have thin edges which can be reduced in extreme cases to zero and therefore much less potential for contamination compared to minus-power lenses, according to DIN EN ISO 13666:2019-12, section 3.10.18, lenses that causes parallel incident light to diverge from a virtual focus, typically worn by a myopic wearer. The latter show increasing edge thickness with increasing power and therefore the distance to the skin is reduced by increased power. Thus again increases the potential for contamination.

Due to the position of wear of a spectacle in direct contact with the human skin, a contamination of the spectacle with materials absorbed on the skin surface is inevitable. These contaminations are typically based on human sebum and include grease, wax esters, various salts like sodium chloride, etc., water, squalene, microorganisms and various other things. The fatty acid content for example reduces the pH of the surface to ∼5 yielding a chemically reactive and potentially aggressive mixture, which can under certain circumstances corrode the spectacle frame, parts of the spectacle frame, in particular the ones in direct contact with the human skin, or the spectacle lenses itself. An investigation on microorganisms on spectacles is found in B. Fritz et al., "A view to a kill? - Ambient bacterial load of frames and lenses of spectacles and evaluation of different cleaning methods, PLOS one, November 28, 2018, 1 - 11 (https://doi.org/10.1371/journal.pone.0207238). Microorganisms which could be detected on the spectacle lens and/or the spectacle frame may be identical to the ones detectable on human skin, such as for example Staphylococcus epidermidis, Staphylococcus hominis, Staphylococcus capitis, Micrococcus luteus and/or Staphylococcus aureus.

It is therefore an objective of the present invention to provide a spectacle lens which prevents the concentration of common contaminations of spectacle lenses and the accumulation of microorganisms, especially on the edge surface thereof. A further objective is to provide an efficient method of manufacturing a spectacle lens preventing the concentration of common contaminations and the accumulation of microorganisms, especially on the edge surface thereof.

This problem is solved by the edged lens according to claim 1 and the method for manufacturing an edged lens according to claim 10.
Preferred embodiments, which might be realized in an isolated fashion or in any arbitrary combination, are listed in the dependent claims.

The spectacle lens preferably is based on a coated edged lens, the coated edged lens comprising at least one spectacle lens substrate and at least one coating. The spectacle lens substrate may be uncoated or precoated, the precoating preferably being on the front surface and/or on the back surface thereof. The spectacle lens substrate may be classified as afocal lens with nominally zero dioptric power according to section 3.6.3 of DIN EN ISO 13666:2019-12 or as corrective lens, i.e. as a lens with dioptric power according to section 3.5.3 of DIN EN ISO 13666:2019-12. Further, the spectacle lens substrate may be classified as single-vision lens according to section 3.7.1 of DIN EN ISO 13666:2019-12; as position-specific single-vision lens according to section 3.7.2 of DIN EN ISO 13666:2019-12; as multifocal lens according to section 3.7.3 of DIN EN ISO 13666:2019-12; as bifocal lens according to section 3.7.4 of DIN EN ISO 13666:2019-12; as trifocal lens according to section 3.7.5 of DIN EN ISO 13666:2019-12; as fused multifocal lens according to section 3.7.6 of DIN EN ISO 13666:2019-12; as power-variation lens according to section 3.7.7 of DIN EN ISO 13666:2019-12; as progressive-power lens according to section 3.7.8 of DIN EN ISO 13666:2019-12; or as degressive-power lens according to section 3.7.9 of DIN EN ISO 13666:2019-12. Further, the spectacle lens substrate may be classified as protective lens according to section 3.5.4 of DIN EN ISO 13666:2019-12; as absorptive lens according to section 3.5.5 of DIN EN ISO 13666:2019-12; as tinted lens according to section 3.5.6 of DIN EN ISO 13666:2019-12; as clear lens according to section 3.5.7 of DIN EN ISO 13666:2019 12; as uniformly tinted lens according to section 3.5.8 of DIN EN ISO 13666:2019-12; a gradient-tinted lens according to section 3.5.9 of DIN EN ISO 13666:2019-12; as double gradient-tinted lens according to section 3.5.10; as photochromic lens according to section 3.5.11 of DIN EN ISO 13666:2019-12; or as polarizing lens according to section 3.5.12 of DIN EN ISO 13666:2019-12.
The spectacle lens substrate preferably is based on an optical material, the optical material being defined according to section 3.3.1 of DIN EN ISO 13666:2019-12 as transparent material capable of being manufactured into optical components. The spectacle lens substrate may be made of mineral glass according to section 3.3.1 of DIN EN ISO 13666:2019-12 and/or of an organic hard resin such as a thermosetting hard resin according to section 3.3.3 of DIN EN ISO 13666:2019-12; a thermoplastic hard resin according to section 3.3.4 of DIN EN ISO 13666:2019-12; or a photochromic material according to section 3.3.5 of DIN EN ISO 13666:2019-12.
Preferably, the spectacle lens substrate is based on at least one of the optical materials mentioned in table 1, particularly preferred on at least one of the organic hard resins.

**Table 1: Examples of optical materials**

| Trade name | Optical material | Average refractive index n_{D}* | Abbe number V_{D}* |
|---|---|---|---|
| CR-39, CR-330, CR-607, CR-630, RAV 700, RAV 7NG, RAV 7AT, RAV 710, RAV 713, RAV 720 | Polyallyldiglycol carbonate ((P)ADC) | 1.500 | 56 |
| RAVolution | Polyurea / Polyurethane | 1.500 | 54 |
| Trivex | Polyurea / Polyurethane | 1.530 | 45 |
| Panlite, Lexan, Makrolon | Polycarbonate (PC) | 1.590 | 29 |
| MR-6 | Polythiourethane | 1.598 | |
| MR-8 | Polythiourethane | 1.598 | 41 |
| MR-7 | Polythiourethane | 1.664 | 32 |
| MR-10 | Polythiourethane | 1.666 | 32 |
| MR-174 | Polyepisulfide | 1.738 | 32 |
| MGC 1.76 | Polyepisulfide | 1.76 | 30 |
| Spectra lite | Urethane /Methacrylate | 1.54 | |
| | Mineral 1.5 | 1.525 | 58 |
| | Mineral 1.6 | 1.604 | 44 |
| | Mineral 1.7 | 1,701 | 39,2 |
| | Mineral 1.8 | 1,802 | 34,4 |
| | Mineral 1.9 | 1,885 | 30 |

| | | | |
|---|---|---|---|
| * Based on sodium D line | | | |

In case, the spectacle lens substrate is made of mineral glass and of an organic hard resin such as a thermosetting hard resin or a thermoplastic hard resin, the mineral glass preferably comprises at least one ultrathin lens. In this case, the organic hard resin may comprise, preferably prior to edging, an uncoated or precoated blank, the blank being defined according to DIN EN ISO 13666:2019-12, section 3.8.1, as piece of optical material with one optically finished surface for the making of a lens; an uncoated or precoated single-vision blank, the single-vision blank being defined according to DIN EN ISO 13666:2019-12, section 3.8.2, as blank with the finished surface having a single nominal surface power; an uncoated or precoated multifocal blank, the multifocal blank being defined according to DIN EN ISO 13666:2019-12, section 3.8.3, as blank with the finished surface having two or more visibly divided portions of different dioptric powers or focal powers; an uncoated or precoated power-variation blank, the power-variation blank being defined according to DIN EN ISO 13666:2019-12, section 3.8.4, as blank with the finished surface having a smooth variation of spherical power over part or all of its area, without discontinuity, thus giving more than one intended focal power; an uncoated or precoated progressive-power blank, the progressive-power blank being defined according to DIN EN ISO 13666:2019-12, section 3.8.5, as power-variation blank where the finished surface is a progressive-power surface; an uncoated or precoated degressive-power blank, the degressive-power blank being defined in DIN EN ISO 13666:2019-12, section 3.8.6, power-variation blank where the finished surface is a degressive-power surface; an uncoated or precoated finished lens, the finished lens being defined according to DIN EN ISO 13666:2019-12, section 3.8.7, as lens of which both sides have their final optical surface; or an uncoated or precoated uncut lens. Alternatively, the organic hard resin may comprise an uncoated or precoated edged lens. Each blank preferably comprises on at least the finished surface thereof at least one ultrathin lens and each finished lens comprises on at least one side thereof at least one ultrathin lens. After surfacing the opposite surface of the respective blank, this opposite surface may comprise at least one ultrathin lens as well, the at least one ultrathin lens being identical or different to the other one in relation to the glass composition, to the average thickness and/or to the shape. Further, the spectacle lens substrate may be made of at least two ultrathin lenses comprising a plastic film in-between. The at least one ultrathin lens may be based on various glass compositions, for example, be borosilicate glass, aluminium borosilicate glass or alkali-free borosilicate glass. Preferably, the at least one ultrathin lens is based on a borosilicate glass or an aluminium borosilicate glass. The at least one ultrathin lens preferably has an average thickness in a range from 10 µm to 1000 µm, further preferably from a range from 13 µm to 760 µm, further preferably from a range from 16 µm to 510 µm, more preferably from a range from 18 µm to 390 µm and most preferably from a range from 19 µm to 230 µm. Especially preferably, the at least one ultrathin lens has an average thickness in a range from 21 µm to 121 µm or from 75 µm to 140 µm or from 80 µm to 220 µm. The average thickness of the at least one ultrathin lens is understood to mean the arithmetic average. Below an average thickness of 10 µm, the at least one ultrathin lens is too mechanically unstable to be able to be combined with at least one of the surfaces of at least one of the organic hard resin components mentioned before. Above an average thickness of 1000 µm, the at least one ultrathin lens can lead to spectacle lenses that would have too great an edge thickness or too great a middle thickness of the spectacle lens. The average thickness of the at least one ultrathin lens is measured preferably with the Filmetrics F10-HC instrument from Filmetrics Inc. The at least one ultrathin lens preferably has a surface roughness Ra of < 1 nm. Further preferably, the surface roughness Ra of the at least one ultrathin lens is within a range from 0.1 nm to 0.8 nm, more preferably within a range from 0.3 nm to 0.7 nm and most preferably within a range from 0.4 nm to 0.6 nm. The aforementioned values for surface roughness Ra are each based on the front surface and the back surface of the at least one ultrathin lens of an unformed, planar ultrathin lens. After forming, the aforementioned values are in each case applicable preferably to that surface of the ultrathin lens that has not been brought into contact with the shaped body. Depending on the shaped body used for forming, the aforementioned values may also be applicable to the surface of the at least one ultrathin lens that was in contact with the shaped body used for forming. The surface roughness Ra of the at least one ultrathin lens is preferably determined by means of white light interferometry, preferably with the NewView 7100 instrument from Zygo Corporation. Ultrathin lenses are commercially available, for example, under the names: D 263 T eco, D 263 LA eco, D 263 M, AF 32 eco, SCHOTT AS 87 eco, B 270 I, each from Schott AG, or Corning Willow Glass or Corning Gorilla Glass, each from Corning Inc.

The spectacle lens or the edged lens comprises at least one coating, preferably on the front surface intended to be fitted away from the eye and/or on the back surface thereof intended to be fitted nearer to the eye. The at least one coating may be selected from at least one of the group consisting of at least one primer coating, at least one hard coating, at least one antireflective coating, at least one mirror coating, at least one photochromic coating, at least one photochromic primer coating, at least one clean coat layer, at least one anti-fog coating, at least one antibacterial and/or antiviral coating. The at least one coating may be applied to the front surface and/or to the back surface of a spectacle lens before edging. Alternatively or additionally, the at least one coating may be applied to the front surface and/or to the back surface of an edged lens, i.e. after the profiling of an uncut uncoated or precoated lens to its required finished size, shape and edge form.
Each of the before mentioned at least one coating is described in detail below. Each of the before mentioned at least one coating may be modified to exhibit an antifouling effect, an antibacterial effect and/or an antiviral effect. In case at least one coating is applied to the edge surface, to the front surface and/or to the back surface, preferably the identical at least one coating is applied to all surface to be coated. For example, in case at least one hard coating should be applied to the edge surface, to the front surface and/or to the back surface, the at least one hard coating to be applied preferably is based on the identical hard coating composition. Further, in case for example at least one hard coating composition should be applied to the edge surface, the front surface and/or the back surface, at least one of the hard coating compositions applied to at least one of those surfaces may be modified to exhibit an antifouling, an antibacterial and/or an antiviral effect.

The edged lens comprises at least one coating on the edge surface thereof. The edged lens preferably comprises on the edge surface at least one coating that withstands the forces during its fitting into a spectacle frame. The edge surface, edge or bevel, i.e. the surface between the front surface and the back surface of the edged lens or the surface bonding the front surface and the back surface of the edged lens, is preferably coated with at least one coating selected from the group consisting of at least one photochromic primer, at least one photochromic coating, at least one primer coating, at least one hard coating, at least one antibacterial and/or antiviral coating, at least one mirror coating, at least one antireflective coating, at least one clean coat layer and at least one anti-fog coating. Further preferably, the edge surface is coated with at least one primer coating, at least one hard coating, at least one antibacterial and/or antiviral coating, at least one mirror coating and/or at least one antireflective coating. Further preferably, the edge surface is coated with at least one primer coating, at least one hard coating and/or at least one clean coat layer. More preferably, the edge surface is coated with at least one primer coating, at least one hard coating, at least one and/or at least one antireflective coating. Most preferably, the edge surface is coated with at least one hard coating.
The edge surface is preferably completely coated with the at least one coating, irrespective if the edge surface is encompassed completely by the spectacle frame or not or if the edge lens protrudes the spectacle frame. The at least one coating of the edge surface preferably is directly adjacent to or slightly overlapping the at least one coating of the front surface and/or the at least one coating of the back surface of the edged lens. Alternatively, at least one identical coating surrounds or encapsulates the uncoated or precoated optical lens substrate, thus simultaneously covering the edge surface, the front surface and the back surface of the edged lens. Further alternatively, at least one identical coating is applied, preferably simultaneously, to the edge surface and the front surface or the back surface of the edged lens, thus avoiding an interface between the coated edge surface and the identically coated front surface or the identically coated back surface of the edged lens.
An advantage of surrounding or encapsulating an uncoated edged lens with at least one coating avoids the chipping or flaking of at least one coating applied to the front surface or the back surface of an uncut lens when the uncut lens is edged. A further advantage of surrounding or encapsulating an edged lens with at least one coating, especially an uncoated edged lens, is avoiding the waste of at least one coating composition. Edging an uncut coated lens results in a waste of at least one coating material as the part of the coated spectacle lens substrate not being fitted as edged lens in a spectacle frame must be disposed.
A surrounded or encapsulated edged lens with at least one coating may be further coated on the edge surface, the front surface and/or on the back surface thereof. Preferably, the at least one additional coating is deposited under vacuum. To seal the thus newly formed edge surface, formed due to the additional at least one coating applied to the front surface and/or the back surface, at least one additional coating may be applied to that newly formed edge surface.
The at least one coating of the edge surface may be applied after the at least one coating of the front surface and/or the at least one coating of the back surface has been applied. Alternatively, if the at least one coating of the edge surface is anyhow present in the coating sequence of the edged lens, the at least one coating of the edge surface is simultaneously applied on the edge surface and on the front surface and/or the back surface of the edged lens. This alternative obviously requires the edging of the uncut lens prior to the application of the at least one coating, at least the edging prior to the application of the at least one coating which should be present on the edge surface and on the front surface and/or on the back surface of the edged lens. If, in this alternative, the identical at least one coating should be present on the edge surface, on the front surface and on the back surface of the edged lens, this at least one identical coating preferably surrounds or encapsulates the uncoated or precoated spectacle lens substrate completely. If, in this alternative, the identical at least one coating should be present on the edge surface and on the front surface or on the back surface of the edged lens, this at least one identical coating surrounds or encapsulates the transition of the edge surface to the front surface or to the back surface, dependent on which surface thereof has been coated with the at least one identical coating.

In case, the at least one coating of the edge surface slightly overlaps the at least one coating of the front surface and/or the at least one coating of the back surface of the edged lens, the risk of a gap formation in-between the at least one coating of the edge surface and the at least one coating of the front surface and/or the at least one coating of the back surface is reduced or preferably minimized. So, the long-term stability of the edged lens is preferably enhanced. Further, in case the at least one coating of the edge surface slightly overlaps the at least one coating on the front surface and/or on the back surface of the edged lens, possible defects resulting from the edging of a coated uncut lens could be sealed. Such possible defect may be for example the complete or partial delamination or flaking, the cracks or fissures of the at least one coating of the front surface and/or the back surface next to the edge surface. Slightly overlapping means that the at least one coating of the edge surface surrounds or encapsulates the transition from the edge surface to the front surface or the transition from the edge surface to the back surface but covers the front surface or the back surface only next to the edge surface of the edged lens. Preferably, next to the edged surface means with respect to the front surface that the covering of the front surface with the at least one coating of the edge surface from the end of the front surface, i.e. from the boundary curve of the front surface, to the end of that at least one coating on the front surface in each point is preferably less than 1 mm, further preferably in a range from 0 µm to 750 µm, more preferably from 0 µm to 500 µm and most preferably from 0 µm to 300 µm. Analogously, next to the edged surface means with respect to the back surface that the covering of the back surface with the at least one coating of the edge surface from the end of the back surface, i.e. from the boundary curve of the back surface, to the end of that at least one coating on the back surface in each point is preferably less than 1 mm, further preferably in a range from 0 µm to 750 µm, more preferably from 0 µm to 500 µm and most preferably from 0 µm to 300 µm.
The boundary curve of the front surface or the back surface preferably is the transition of the front surface or the back surface, each of the edged lens, either to air or the spectacle frame.
Preferably, the at least one coating of the edge surface is modified to be effective against microorganisms. Further preferably, the at least one coating is modified to prevent the growth and spread of microorganisms. Further preferably, the at least one coating is modified to show an antifouling effect, an antibacterial effect and/or an antiviral effect.
At least one coating of the front surface and/or the back surface and the at least one coating of the edged surface each of the edged lens may be identical or different from each other. In case at least one coating of the front surface and/or of the back surface is different from the at least one coating of the edge surface, the at least one coating of the front surface and/or of the back surface may be for example a hard coating and the at least one coating of the edge surface, different thereto, may be for example a hard coating modified to be effective against microorganisms.
An advantage of coating the edge surface with at least one coating is that an established process according to which the front and the back surface of a blank are optically finished, the finished front and/or finished back surface is/are coated, and the coated finished lens edged, needs not to be adjusted. A further advantage of coating the edge surface with at least one coating is that all coatings of the front surface and all coatings of the back surface are sealed simultaneously.

The edge, edge surface or bevel of the edged lens preferably comprises at least one hard coating. Preferably, the at least one hard coating is the coating next to the uncoated or precoated edge surface of the edged lens. The edged lens may comprise at least one hard coating only on its edge surface. Further, in case the spectacle lens substrate is made of an organic hard resin, preferably at least one of the finished surfaces of the spectacle lens substrate comprises at least one hard coating, further preferably both finished surfaces of the spectacle lens substrate comprise at least one hard coating. The at least one finished surface of the spectacle lens substrate may be uncoated or precoated. Preferably, the at least one hard coating is the coating next to the uncoated or precoated front surface or the uncoated or precoated back surface of the spectacle lens substrate.
The at least one hard coating applied to the edge surface of the edged lens, to the uncoated or precoated front surface of the spectacle lens substrate or applied to the uncoated or precoated back surface of the spectacle lens substrate each may be modified to exhibit an antifouling, antibacterial and/or an antiviral effect.
The following details given with respect to the at least one hard coating shall apply irrespective of the location of the at least one hard coating, i.e. irrespective if the uncoated or precoated edge surface, the uncoated or precoated front surface and/or the uncoated or precoated back surface each comprises at least one hard coating.
The at least one hard coating preferably has an average thickness in a range of from 0.6 µm to 10 µm, further preferably in a range of from 0.8 µm to 6.6 µm, more preferably in a range of from 1.1 µm to 5.8 µm and most preferably in a range of from 1.6 µm to 4.9 µm. The average thickness of the at least one hard coating is preferably determined by the measurement of the spectral reflectivity and/or the spectral transmissivity. The average thickness is the arithmetic average of the physical thickness of the at least one hard coating measured in at least three positions of the at least one hard coating after application and curing. Preferably, an optical spectrometer, such as one of the devices F20, F10-HC or F10-AR of the company Filmetrics Inc., preferably the device F10-HC, is used to determine the average thickness of the at least one hard coating. Illumination of a spectacle lens or an edged lens comprising a spectacle lens substrate and at least one hard coating with white light causes interference spectra dependent on the physical thickness of the at least one hard coating and the respective refractive index thereof. The path difference corresponds exactly to the multiple of the optical thickness. The average thickness is preferably calculated with Fast Fourier Transformation (FFT). Alternatively, the average thickness of the at least one hard coating may be determined with at least one scanning electron microscope photograph of a cross-section of the spectacle lens or the edged lens comprising a spectacle lens substrate and at least one hard coating. The thickness of the at least one hard coating is determined in at least three positions and the arithmetic average is formed thereof.

The at least one hard coating may be based on at least one of the hard coating compositions disclosed in US 2005/0171231 A1, in US 2009/0189303 A1 or in US 2002/0111390 A1. Alternatively, the at least one hard coating may be based on the abrasion resistant coating composition disclosed in WO 2007/070976 A1.

The at least one hard coating preferably is based on at least one hard coating composition disclosed in EP 2 578 649 A1, particularly in EP 2 578 649 A1, claim 1. The at least one hard coating composition configured to produce the at least one hard coating preferably comprises
A)
   a) at least one silane derivative of the formula (I) Si(OR¹)(OR²)(OR³)(OR⁴), wherein R¹, R², R³ and R⁴, which may be the same or different, are selected from an alkyl, an acyl, an alkyleneacyl, a cycloalkyl, an aryl or an alkylenearyl group, each of which may optionally be substituted, and/or
   b) at least one hydrolysis product of the at least one silane derivative of the formula (I), and/or
   c) at least one condensation product of the at least one silane derivative of the formula (I), and/or
   d) any mixture of the components a) to c) thereof;
B)
   a) at least one silane derivative of the formula (II) R⁶R⁷₃₋ₙSi(OR⁵)ₙ, in which R⁵ is selected from an alkyl, an acyl, an alkyleneacyl, a cycloalkyl, an aryl or an alkylenearyl group, each of which may optionally be substituted, R⁶ is an organic radical containing at least one epoxide group, R⁷ is selected from an alkyl, a cycloalkyl, an aryl or an alkylenearyl group, each of which may optionally be substituted, n is 2 or 3; and/or
   b) at least one hydrolysis product of the at least one silane derivative of the formula (II), and/or
   c) at least one condensation product of the at least one silane derivative of the formula (II), and/or any mixture of the components a) to c) thereof;
C) at least one colloidal inorganic oxide, hydroxide, oxide hydrate, fluoride and/or oxyfluoride;
D) at least one epoxide compound having at least two epoxide groups; and
E) at least one catalyst system comprising at least one Lewis acid and at least one thermolatent Lewis acid-base adduct.
The term "at least one hydrolysis product" of the at least one silane derivative of the formula (I) or (II) respectively expresses the fact that the at least one silane derivative of the formula (I) or of the formula (II) each has already been at least partly hydrolyzed to form silanol groups.
The term "at least one condensation product" of the at least one silane derivative of the formula (I) or of the formula (II) respectively expresses the fact that a certain degree of crosslinking has also already taken place through condensation reaction of the silanol groups.
The at least one silane derivative of the formula (I) may be selected from tetramethoxysilane, tetraethoxysilane, tetrapropoxysilane, tetraisopropoxysilane, tetrabutoxysilane, tetraisobutoxysilane, tetrakis(methoxyethoxy)silane, tetrakis(methoxypropoxy)silane, tetrakis(ethoxyethoxy)silane, tetrakis(methoxyethoxyethoxy)silane, trimethoxyethoxysilane, dimethoxydiethoxysilane or mixtures thereof.
The at least one silane derivative of the formula (II) may be selected from 3-glycidoxymethyl-trimethoxysilane, 3-glycidoxypropyltrihydroxysilane, 3-glycidoxypropyldimethylhydroxysilane, 3-glycidoxypropyldimethylethoxysilane, 3-glycidoxypropylmethyldiethoxysilane, 3-glycidoxypropyltrimethoxysilane, 3-glycidoxypropyltriethoxysilane, 3-glycidoxypropyldimethoxymethylsilane, 3-glycidoxypropyldiethoxymethylsilane, 2-(3,4-epoxycyclohexyl)ethyltrimethoxysilane or mixtures thereof.
The at least one colloidal inorganic oxide may be selected from silicon dioxide, titanium dioxide, zirconium dioxide, tin dioxide, antimony oxide, aluminum oxide, silver oxide, copper oxide or mixtures thereof.

The mean particle diameter of the at least one colloidal inorganic oxide, hydroxide, fluoride or oxyfluoride is preferably selected such that the transparency of the at least one hard coating is not affected. Preferably, the at least one colloidal inorganic oxide, hydroxide, oxide hydrate, fluoride and/or oxyfluoride has a mean particle diameter in the range of from 2 nm to 150 nm, even more preferably of from 2 nm to 70 nm. The mean particle diameter is determined preferably by means of dynamic light scattering. The at least one colloidal inorganic oxide, hydroxide, oxide hydrate, fluoride or oxyfluoride contributes to an increase in scratch resistance through incorporation into the existing network. In addition, selection of at least one colloidal inorganic oxide, hydroxide, oxide hydrate, fluoride or oxyfluoride allows the refractive index of the at least one hard coating to be matched to the refractive index of the uncoated spectacle lens substrate or to a precoating of the spectacle lens substrate.
The at least one epoxide compound having at least two epoxide groups is preferably a polyglycidyl ether compound, more preferably a diglycidyl ether or triglycidyl ether compound. For example, as at least one epoxide compound comprising at least two epoxide compounds digylcidyl ether, ethylenglycoldiglycidyl ether, propylenglycoldiglycolglycidyl ether, 1,4-butandioldiglycidyl ether, 1,6-hexandioldiglycidyl ether, trimethylolpropantriglycidyl ether, triglycidylglycerin and/or trimethylolethantriglycidylether may be used in the coating composition. Preferably, the at least epoxide compound comprises trimethylolpropantriglycidyl ether, butandioldiglycidyl ether and/or 1,6-hexandioldiglycidyl ether.
The at least one catalyst system comprising at least one Lewis acid and at least one thermolatent Lewis acid-base adduct enables very homogeneous crosslinking and hence also constantly high strength over the entire layer thickness of the at least one hard coating. The term "Lewis acid" relates to an electrophilic electron pair acceptor compound, the term "Lewis base" is understood to mean an electron pair donor compound. The at least one Lewis acid is preferably one which have catalytic activity even at relatively low temperatures, for example at room temperature. The at least one Lewis acid may be selected from ammonium salts, metal salts, especially of metals from one of groups 1 (i.e. alkali metal salts), 2 (i.e. alkaline earth metal salts) or 13 (preferably AI or B) of the periodic table of the elements, halides of an element of group 13 of the periodic table of the elements (especially AIX₃ or BX₃, where X is chlorine or fluorine), organic sulphonic acids and amine salts thereof, alkali metal or alkaline earth metal salts, for example alkali metal or alkaline earth metal salts of carboxylic acids, fluoride salts, organotin compounds, or a mixture thereof. Preferred metal salts of metals from one of the groups 1, 2 and 13 of the periodic table of the elements are, for example, perchlorates or carboxylates. Preferred Lewis acids are, for example, ammonium perchlorate, magnesium perchlorate, sulphonic acids and salts thereof, such as trifluoromethanesulphonic acid and salts thereof.
The at least one Lewis acid-base adduct is understood to mean a compound which has catalytic activity with regard to the chemical reaction in question only at relatively high temperatures, while it is essentially still catalytically inactive at room temperature. Only through the supply of sufficient thermal energy is a thermolatent catalyst compound converted to a catalytically active state.
The at least one silane derivative of the formula (I) and/or the at least one hydrolysis product of the silane derivative of the formula (I) and/or the at least one condensation product of the silane derivative of the formula (I) is/are preferably present in the at least one hard coating composition in an amount of 5% by weight to 50% by weight, more preferably of 6% by weight to 20% by weight, each based on the total weight of the at least one hard coating composition. The amounts given before apply with regard to the at least one silane derivative of the formula (I), with regard to the at least one hydrolysis product of the formula (I), with regard to the at least one condensation product of the formula (I) or with regard to any mixture thereof. The amounts given before apply as well with regard to a mixture of silane derivatives of the formula (I), with regard to a mixture of hydrolysis products of the at least one silane derivative of the formula (I), with regard to a mixture of condensation products of the at least one silane derivative of the formula (I) or with regard to any mixture thereof.
The at least one silane derivative of the formula (II) and/or the at least one hydrolysis product of the silane derivative of the formula (II) and/or the at least one condensation product of the silane derivative of the formula (II) is/are preferably present in the at least one hard coating composition in an amount of 5% by weight to 50% by weight, more preferably of 6% by weight to 20% by weight, each based on the total weight of the at least one hard coating composition. The amounts given before apply with regard to the at least one silane derivative of the formula (II), with regard to the at least one hydrolysis product of the formula (II), with regard to the at least one condensation product of the formula (II) or with regard to any mixture thereof. The amounts given before apply as well with regard to a mixture of silane derivatives of the formula (II), with regard to a mixture of hydrolysis products of the at least one silane derivative of the formula (II), with regard to a mixture of condensation products of the at least one silane derivative of the formula (II) or with regard to any mixture thereof.
The weight ratio of the at least one silane derivative of the formula (I), the at least one hydrolysis product of the silane derivative of the formula (I) and/or the at least one condensation product of the silane derivative of the formula (I) relative to the at least one silane derivative of the silane derivative of the formula (II), the at least one hydrolysis product of the silane derivative of the formula (II) and/or the at least one condensation product of the silane derivative of the formula (II) is preferably in the range of from 95/5 to 5/95, more preferably in the range of from 70/30 to 30/70, and most preferably in the range of from 60/40 to 40/60.
The at least one colloidal inorganic oxide, hydroxide, fluoride and/or oxyfluoride is/are present in the at least one hard coating composition preferably in an amount of 5% by weight to 50% by weight, more preferably of 6% by weight to 25% by weight, each based on the total weight of the at least one hard coating composition. The amounts mentioned before apply for one type of colloidal oxide, one type of hydroxide, one type of fluoride, one type of oxyfluoride, for a mixture thereof, for a mixture of different colloidal oxides, a mixture of different colloidal hydroxides, a mixture of different colloidal fluorides, a mixture of different colloidal oxyfluorides or for any mixture thereof. The mixture of different colloidal oxides, hydroxides, fluorides or oxyfluorides may for example comprise one type of each in different particle sizes or different types of each in the same or in a different particle size.
The at least one epoxide compound having at least two epoxide groups is present in the at least one hard coating composition preferably in an amount of 0.1% by weight to 10% by weight, more preferably of 0.5% by weight to 10% by weight, each based on the total weight of the at least one hard coating composition. The amounts given before apply with regard to one type of epoxide compound or to a mixture of different types of epoxide compounds.

The at least one catalyst system is present in the at least one hard coating composition preferably in an amount in the range from 0.01% by weight to 5% by weight, more preferably in the range from 0.1% by weight to 3% by weight, each based on the total weight of the hard coating composition.
The weight ratio of at least one Lewis acid to the at least one thermolatent Lewis acid-base adduct is preferably in the range from 20/1 to 1/2, more preferably from 5/1 to 2/1.
The hard coating composition further comprises at least one solvent comprising at least one alcohol, at least one ether, at least one ester or water. In case the at least one solvent comprises two different solvents, the boiling point of the first solvent S1 and the boiling point of the second solvent S2 is either S1/S2 ≥ 1.2 or S1/S2 ≤ 0.8. Further, in case the at least one solvent comprises two different solvents, the weight ratio of the first solvent to the second solvent is preferably in the range of from 5 to 0.01, more preferably in the range of from 2 to 0.2.
Preferably water is present in an amount of 2% by weight to 15% by weight, based on the total weight of the hard coating composition.
To modify the at least one hard coating composition to exhibit an antifouling, an antibacterial and/or an antiviral effect the at least one hard coating preferably comprises at least one additivef. The at least one additive may be selected of at least one of the group consisting of at least one metal, at least one metal oxide, at least one metal hydroxide, at least one metal oxide hydrate, at least one metal salt, at least one metal sulfide, at least one organic component acting as antifouling, antibacterial and/or antifungal agent and at least one coordination complex acting as antifouling, antibacterial and/or antifungal agent. The at least one additive preferably comprises at least one metal, at least one metal oxide, at least one metal hydroxide, at least one metal oxide hydrate, at least one metal salt and/or at least one metal sulfide each composed of or comprising silver, preferably Ag, AgO, Ag₂O, AgNO₃, AgCl, Ag₂S; copper, preferably Cu, Cu₂O; titanium, preferably TiO, TiO₂, Ti₂O₃, Ti₃O₄; zinc, preferably ZnO; and/or iron, preferably FeO, Fe₂O₃; boron, preferably B₂O₃, B(OH)₃. As at least one metal one type of metal or one type of metal alloy, a combination of different metals or a combination of different metal alloys, as at least one metal oxide one type of metal oxide or a combination of different types of metal oxides, as at least one metal hydroxide at least one type of metal hydroxide or a combination of different types metal hydroxides, as at least one metal oxide hydrate at least one type of metal oxide hydrate or a combination of different types of metal oxide hydrates, as at least one metal salt at least one type of metal salt or a combination of different types of metal salts, as at least one metal sulfide at least one type of metal sulfide or a combination of different types of metal sulfides may be used. The at least one additive further preferably comprises at least one metal, at least one metal oxide, at least one metal hydroxide, at least one metal oxide hydrate and/or at least one metal salt each preferably comprises or is composed of at least one metal selected from silver, titanium, zinc, boron, copper and/or alloys thereof. The metal-based additives can be supported on an inert inorganic material like for instance silica or other metal oxides, zeolite, synthetic zeolite, zirconium phosphate, calcium phosphate, ceramics, soluble glass powders based on sodium-potassium silicate, alumina, apatite or calcium carbonate.
Preferably, the at least one additive comprises at least one organic component acting as antifouling, antibacterial and/or antifungal agent selected from at least one of the group consisting of 5-chloro-2-(2,4-dichlorophenoxy)phenol, 10,10'-oxybisphenoxoarsine, octylisothiazolinone, dichloroctylisothiazolinone, butylbenzisothiazolinone, a mixture of 5-chloro-2-methyl-2H-isothiazol-3-on and 2-methyl-2H-isothiazol-3-on, 1-((diiodomethyl)sulfonyl)-4-methylbenzene, thiabendazole, alkyldimethylbenzylammonium chloride (ADBAC) and iodopropynyl butylcarbamate.
Preferably, the at least one additive comprises at least one coordination complex acting as antifouling, antibacterial and/or antifungal agent selected from at least one of the group consisting of a coordination complex of copper and zinc. The at least one additive preferably comprises at least one coordination complex of copper, preferably copper thiocyanate and/or copper pyrithione, and/or at least one coordination complex of zinc, preferably zinc pyrithione.
Alternatively or additionally, the at least one additive may comprise at least one inorganic or organic phosphonium salt, such as for example fluorides, chlorides, bromides, iodides, sulfoisophthalates, sulfoterephthalates, 4-sulfonaphthalene-2,7-dicarboxylates and like sulfonates of tri-n-butyldecyl phosphonium, tri-n-butyloctadecyl phosphonium, tri-n-butylhexadecyl phosphonium, tri-n-butyltetradecyl phosphonium, tri-n-butyldodecyl phosphonium, tri-n-butyldecyl phosphonium or tri-n-butyloctadecyl phosphonium.
The at least one additive may be present in the at least one hard coating composition preferably in an amount from a range of from 0.00001% by weight to 2.7% by weight, further preferably in an amount from a range of from 0.0001% by weight to 2.4% by weight, more preferably in an amount from a range of from 0.001% by weight to 2.1% by weight and most preferably in an amount from a range of from 0.01% by weight to 1.7% by weight, each based on the total weight of the at least one hard coating composition. The amounts mentioned before apply with regard to one type of additive as well as with regard to a mixture of different additives.
In case the at least one additive is in the form of particles, the amount of the at least one colloidal inorganic oxide, hydroxide, fluoride and/or oxyfluoride may be reduced by the amount of the at least one additive in the form of particles. In case the at least one additive is in the form of particles, preferably the particle size is in the range of from 1 nm to 1 µm, further preferably from 2 nm to 800 nm, more preferably from 3 nm to 600 nm and most preferably from 4 nm to 400 nm. Preferably at least a part of the particles is not completely embedded in the at least one hard coating.
The components of the hard coating composition resulting in a hard coating are used in that they add to 100% by weight based on the total weight of the coating composition.
The hard coating composition mentioned before resulting in at least one hard coating is preferably applied to the uncoated or precoated front surface or the uncoated or precoated back surface of the spectacle lens substrate, preferably to both before mentioned surfaces of the spectacle lens substrate by dip coating or by spin coating. The hard coating composition mentioned before resulting in at least one hard coating is preferably applied to the uncoated or precoated edge surface by means of a brush and/or a doctor blade. In case the at least one hard coating composition mentioned before resulting in at least one hard coating is applied simultaneously to the uncoated or precoated front surface, the uncoated or precoated back surface and the uncoated or precoated edge surface each of an edged lens, this simultaneous application is performed preferably by dip coating.
The use of the above mentioned coating composition comprising the components (A) to (E), i.e. at least one first silane derivative of formula (I), at least one hydrolysis product and/or at least one condensation product thereof, at least one second silane derivative of formula (II), at least one hydrolysis product and/or at least one condensation product thereof, at least one colloidal inorganic oxide, hydroxide, fluoride and/or oxyfluoride, at least one epoxide compound and at least one catalyst system, enables the production of at least one hard coating having very good adhesive strength on the uncoated or precoated edge surfaces of edged lenses based on different optical materials as well as on the uncoated or precoated front surface and/or the uncoated or precoated back surface of the spectacle lens substrate based on different optical materials; having a high hardness; being of high scratch resistance and showing a low tendency to crack formation. The at least one hard coating composition is preferably cured and/or hardened by applying direct heat or at least one single electromagnetic pulse, as described below.

Alternatively or additionally to the before mentioned at least one hard coating composition resulting in at least one hard coating, the edge surface of an edged lens, optionally the front surface of a uncoated or precoated spectacle lens substrate and optionally the back surface of a uncoated of precoated spectacle lens substrate, each comprises at least one hard coating which is preferably based on at least one hard coating composition comprising
A)
   a) at least one silane derivative of the formula (III) R¹R²₃₋ₙSi(OR³)ₙ, wherein R¹ comprises an alkyl group, a cyclo alkyl group, an acyl group, an aryl group or a hetero aryl group, each of which may be substituted, R² is an organic rest comprising an epoxide group, R³ comprises an alkyl group, a cyclo alkyl group, an aryl group or a hetero aryl group, each of which may be substituted, n = 2 or 3, and/or
   b) at least one hydrolysis product of the silane derivative of the formula (III), and/or
   c) at least one condensation product of the silane derivative of the formula (III), and/or
   d) any mixture of components a) to c);
B) at least one colloidal inorganic oxide, hydroxide, oxide hydrate, fluoride and/or oxyfluoride;
C) at least one epoxy component comprising at least two epoxy groups; and
D) at least one catalyst system comprising at least one Lewis acid and at least one thermolatent Lewis base-adduct.
The term "at least one hydrolysis product" of the at least one silane derivative of the formula (III) expresses the fact that the at least one silane derivative of the formula (III) has already been at least partly hydrolyzed to form silanol groups.
The term "at least one condensation product" of the at least one silane derivative of the formula (III) expresses the fact that a certain degree of crosslinking has also already taken place through condensation reaction of the silanol groups.
The at least one silane derivative of the formula (III) and/or the at least one hydrolysis product of the silane derivative of the formula (III) and/or the at least one condensation product of the at least one silane derivative of the formula (III) and/or any mixture thereof is/are present in the at least one hard coating composition in a total amount in the range preferably of from 9% by weight to 81% by weight, further preferably of from 13% by weight to 76% by weight, more preferably of from 19% by weight and most preferably of from 23% by weight to 66% by weight, each based on the total weight of the at least one coating composition. The amounts given before apply with regard to the at least one silane derivative of the formula (III), with regard to the at least one hydrolysis product of the formula (III), with regard to the at least one condensation of the formula (III) or with regard to any mixture thereof. The amounts given before apply as well with regard to a mixture of silane derivatives of the formula (III), with regard to a mixture of hydrolysis products of the at least one silane derivative of the formula (III), with regard to a mixture of condensation products of the at least one silane derivative of the formula (III) or with regard to any mixture thereof.
The at least one colloidal inorganic oxide, hydroxide, oxide hydrate, fluoride and/or oxyfluoride is/are present in the at least one hard coating composition in a total amount in the range preferably of from 3% by weight to 60% by weight, further preferably of from 6% by weight to 58% by weight, more preferably of from 9% by weight to 57% by weight and most preferably of from 13% by weight to 55% by weight, each based on the total weight of the at least one hard coating composition. The amounts given before apply with regard to one type of colloidal inorganic oxide, one type of colloidal inorganic hydroxide, one type of colloidal inorganic oxide hydrate, one type of colloidal inorganic fluoride, one type of colloidal inorganic oxyfluoride and any mixture thereof. The amounts given before apply as well with regard to a mixture of different colloidal inorganic oxides, a mixture of different colloidal inorganic hydroxides, a mixture of different colloidal inorganic oxide hydrates, a mixture of different colloidal inorganic fluorides, a mixture of different colloidal inorganic oxyfluorides or any mixture thereof. The mentioned mixtures may include each different particles sizes or different types of colloidal inorganic oxides, hydroxides, oxide hydrates, fluorides and/or oxyfluorides.
The at least one epoxide compound comprising at least two epoxide groups is present in the at least one hard coating composition in an amount in the range preferably of from 0.01% by weight to 14% by weight, further preferably of from 0.07% by weight to 11% by weight, more preferably of from 0.1% by weight to 6% by weight and most preferably of from 0.2% by weight to 13% by weight, each based on the total weight of the at least one hard coating composition. The amount given before apply with regard to one type of epoxide compound as well as with regard to a mixture of different epoxide compounds.
The at least one catalyst system comprising at least one Lewis acid and at least one thermolatent Lewis base-adduct is present in the at least one hard coating composition in an amount in the range preferably from 0.04% by weight to 4% by weight, further preferably from 0.1% by weight to 3% by weight, more preferably from 0.2% by weight to 2% by weight and most preferably from 0.3% by weight to 1% by weight, each based on the total weight of the at least one hard coating composition. The weight ratio of the at least one Lewis acid to the at least one thermolatent Lewis base-adduct is preferably in a range from 20:1 to 2:1, further preferably from 18:1 to 1:2, more preferably from 13:1 to 1:1 and most preferably from 6:1 to 1:1.
To modify the at least one hard coating composition to exhibit an antifouling, an antibacterial and/or an antiviral effect the at least one hard coating preferably comprises at least one additive. The at least one additive may be selected of at least one of the group consisting of at least one metal, at least one metal oxide, at least one metal hydroxide, at least one metal oxide hydrate, at least one organic component acting as antifouling, antibacterial and/or antifungal agent and at least one coordination complex acting as antifouling, antibacterial and/or antifungal agent, described above, in the amount as described above. The at least one additive may be in the form of particles with the particle size as described above.

The at least one hard coating composition may comprise at least one organic solvent and/or water. The components of the at least one hard coating composition resulting in at least one hard coating are used in that they add to 100% by weight based on the total weight of the at least one hard coating composition.
As at least one silane derivate of the formula (III) 3-glycidoxymethyl¬trimethoxysilane, 3-glycidoxypropyltrihydroxysilane, 3-glycidoxypropyl-dimethylhydroxysilane, 3-glycidoxypropyl-dimethylethoxysilane, 3-glycidoxypropylmethyldiethoxysilane, 3-glycidoxypropyltrimethoxysilane, 3-glycidoxypropyl¬triethoxysilane, 3-glycidoxypropyldimethoxymethyl¬silane, 3-glycidoxypropyldiethoxy-methylsilane and/or 2-(3,4-epoxycyclohexyl)ethyltrimethoxysilane for example may be used in the at least one hard coating composition. Preferably, 3-glycidoxypropyltrimethoxysilane and/or 3-glycidoxypropyltriethoxysilane is/are used as silane derivative of the formula (III).
The at least one colloidal inorganic oxide, hydroxide and/or oxide hydrate may be a metal oxide, metal hydroxide and/or metal oxide hydrate, where the metal ions of the metal oxide, metal hydroxide and/or metal oxide hydrate comprise or are metals of titanium, preferably TiO₂, of silicon, preferably SiO₂, of zirconium, preferably ZrO₂, of tin, preferably SnO₂, of antimony, preferably Sb₂O₃, of aluminum, preferably Al₂O₃ or AIO(OH), of silver, preferably Ag₂O, of copper, preferably CuO or Cu₂O and/or mixed oxides and/or mixtures thereof. Preferably, the colloidal inorganic oxide, hydroxide, oxide hydrate is a metal oxide, metal hydroxide and/or metal oxide hydrate, wherein the metal ions of the metal oxide, metal hydroxide and/or metal oxide hydrate comprise or are metals of titanium, silicon, zirconium or mixtures thereof, further preferably of silicon. Further preferably, the at least one colloidal inorganic oxide, hydroxide and/or oxide hydrate form core-shell particles. In such core-shell particles the core comprises preferably a metal oxide, metal hydroxide and/or metal oxide hydrate, wherein the metal ions of the metal oxide, metal hydroxide and/or metal oxide hydrate comprise or are metals of titanium, preferably TiO₂, and/or of zirconium, preferably ZrO₂ and the shell comprises preferably a metal oxide, metal hydroxide and/or metal oxide hydrate, wherein the metal ions of the metal oxide, metal hydroxide and/or metal oxide hydrate comprise or are silicon, preferably SiO₂. As colloidal inorganic fluoride magnesium fluoride may be used. The at least one colloidal oxide, hydroxide, oxide hydrate, fluoride and/or oxyfluoride has a mean particle size in the range preferably from 3 nm to 70 nm, further preferably from 6 nm to 64 nm, more preferably from 8 nm to 56 nm and most preferably from 9 nm to 52 nm.
As at least one epoxide compound comprising at least two epoxide compounds digylcidyl ether, ethylenglycoldiglycidyl ether, propylenglycoldiglycolglycidyl ether, 1,4-butandioldiglycidyl ether, 1,6-hexandioldiglycidyl ether, trimethylolpropantriglycidyl ether, triglycidylglycerin and/or trimethylolethantriglycidylether for example may be used in the at least one hard coating composition. Preferably, the at least epoxide compound comprises trimethylolpropantriglycidyl ether, butandioldiglycidyl ether and/or 1,6-hexandioldiglycidyl ether.
As at least one Lewis acid ammonium perchlorate, magnesium perchlorate, sulfonic acids and/or salts of sulfonic acids, such as trifluormethane sulfonic acid and/or salts thereof, for example may be used in the at least one catalyst system.

As at least one Lewis base-adduct a metal complex compound, such as aluminum acetylacetonate, iron acetylacetonate and/or zinc acetylacetonate, for example may be used in the at least one catalyst system.
The use of the at least one hard coating composition comprising the components (A) to (D), i.e. at least one silane derivative of the formula (III), at least one hydrolysis product and/or at least one condensation product thereof, least one colloidal inorganic oxide, hydroxide, oxide hydrate, fluoride and/or oxyfluoride, at least one epoxide compound and at least one catalyst system, enables the production of at least one hard coating having very good adhesive strength on the edge surface of an uncoated or precoated edged lens based on different optical material, optionally on an uncoated or precoated front surface and/or an uncoated or precoated back surface of a spectacle lens substrate based on different optical materials; having a high hardness; being of high scratch resistance and showing a low tendency to crack formation.
The at least one hard coating composition resulting in at least one hard coating is preferably applied to the uncoated or precoated edge surface of an edged lens by means of a brush and/or a doctor blade. The at least one hard coating composition resulting in at least one hard coating is preferably applied to the uncoated or precoated front surface and/or the uncoated or precoated back surface of a spectacle lens substrate of the edged lens by dip coating or by spin coating. In case the at least one hard coating composition resulting in at least one hard coating is simultaneously applied to the uncoated or precoated edge surface, the uncoated or precoated front surface and the uncoated or precoated back surface, preferably the at least one hard coating composition is applied via dip coating.
The at least one hard coating composition is preferably cured and/or hardened by the direct application of heat or by the application of at least one electromagnetic pulse.

Alternatively or additionally to the above mentioned hard coating compositions each resulting in a hard coating, the edge surface of an edged lens, optionally the uncoated or precoated front surface of a spectacle lens substrate or an edged lens, and optionally the uncoated or precoated back surface of a spectacle lens substrate or an edged lens, each may comprise at least one primer coating. In case the uncoated or precoated edge surface of an edged lens comprises at least one primer coating and at least one hard coating, the at least one hard coating is the outermost coating thereof. The same applies to the coating sequence of at least one primer coating and at least one hard coating in case the uncoated or precoated front surface and/or the uncoated or precoated back surface of a spectacle lens substrate or an edged lens is coated therewith. The at least one primer coating or the at least one hard coating may be modified to show an antifouling effect, an antibacterial effect and/or an antiviral effect. Alternatively, both the at least one primer coating and the at least one hard coating may be modified to show an antifouling effect, an antibacterial effect and/or an antiviral effect. In case, both the at least one primer coating and the at least one hard coating are modified, the at least one additive providing the antifouling effect, the antibacterial effect and/or the antiviral effect to the respective at least one coating may be identical to or different from each other.
The following details given with respect to the at least one primer coating apply for the at least one primer coating applied to the uncoated or precoated edge surface as well as optionally applied to the uncoated or precoated front surface and/or optionally applied to the uncoated or precoated back surface each of a spectacle lens substrate or an edged lens.
The average thickness of the at least one primer coating preferably lies in a range of from 300 nm to 1200 nm, further preferably in a range of from 340 nm to 1150 nm, further preferably in a range of from 390 nm to 1120 nm, more preferably in a range of from 440 nm to 1110 nm and most preferably in a range of from 470 nm to 1100 nm. The average thickness is the arithmetic average of the physical thickness of the at least one primer coating measured in at least three positions of the at least one primer coating after application and curing. Preferably, the average thickness of the at least one primer coating is determined by the measurement of the spectral reflectivity and/or the spectral transmissivity. Preferably, an optical spectrometer, such as one of the devices F20, F10-HC or F10-AR of the company Filmetrics Inc., preferably the device F10-HC, is used to determine the average thickness of the at least one primer coating. Illumination of a spectacle lens comprising a spectacle lens substrate or an edged lens and at least one primer coating with white light causes interference spectra dependent on the physical thickness of the at least one primer coating and the respective refractive index thereof. The path difference corresponds exactly to the multiple of the optical thickness. The average thickness is preferably calculated with Fast Fourier Transformation (FFT). Alternatively, the average thickness of the at least one primer coating may be determined with at least one scanning electron microscope photograph of a cross-section of the spectacle lens comprising a spectacle lens substrate or an edged lens and at least one primer coating. The thickness of the at least one primer coating is determined in at least three positions and the arithmetic average is formed thereof.

The at least one primer coating is preferably based on at least one primer coating composition comprising
i) at least one aqueous aliphatic, cycloaliphatic, aromatic or heteroaromatic polyurethane dispersion, at least one aqueous aliphatic, cycloaliphatic, aromatic or heteroaromatic polyurea dispersion, at least one aqueous aliphatic, cycloaliphatic, aromatic or heteroaromatic polyurethane-polyurea dispersion and/or at least one aqueous aliphatic, cycloaliphatic, aromatic or heteroaromatic polyester dispersion, preferably at least one aqueous aliphatic polyurethane dispersion or at least one aqueous aliphatic polyester dispersion and more preferably at least one aqueous aliphatic polyurethane dispersion,
ii) at least one solvent,
iii) optionally at least one additive.
The at least one aqueous aliphatic, cycloaliphatic, aromatic or heteroaromatic polyurethane dispersion, at least one aqueous aliphatic, cycloaliphatic, aromatic or heteroaromatic polyurea dispersion, at least one aqueous aliphatic, cycloaliphatic, aromatic or heteroaromatic polyurethane-polyurea dispersion and/or at least one aqueous aliphatic, cycloaliphatic, aromatic or heteroaromatic polyester dispersion is/are present in the at least one primer coating composition in a total amount selected from a range preferably of from 2% by weight to 38% by weight, further preferably of from 4% by weight to 34% by weight, further preferably of from 5% by weight to 28% by weight, more preferably of from 6% by weight to 25% by weight and most preferably of from 7% by weight to 21% by weight, each based on the total weight of the at least one primer coating composition. The total amount comprises the amount of only one of the dispersions mentioned before or a mixture thereof. The at least one primer coating composition comprises preferably at least one aqueous polyurethane dispersion, wherein the polyurethane comprises a polyester unit as a spacer or the polyurethane dispersion is a polyurethane-polyurea dispersion, characterized by the occurrence of both urethane and urea groups in a macromolecular chain of the polyurethane-polyurea. Such polyurethane dispersions are described for example in WO 94/17116 A1, in particular in WO 94/17116 A1, page 7, lines 11 to 33. The aqueous polyurethane dispersion may be blended with anionically stabilized acrylic emulsions, as described in WO 94/17116 A1, in particular in WO 94/17116 A1, page 7, lines 33 to 35. The at least one solvent is present in the at least one primer coating composition in an amount selected from a range preferably of from 68% by weight to 99% by weight, further preferably of from 69% by weight to 98% by weight, more preferably of from 81% by weight to 97% by weight and most preferably of from 89% by weight to 93% by weight, each based on the total weight of the at least one primer coating composition. The amounts mentioned before apply with regard to one type of solvent as well as with regard to a mixture of different solvents.
As at least one solvent preferably at least one organic solvent with a low boiling point of < 100°C under normal pressure and at least one organic solvent with a middle boiling of 100°C to 150°C under normal pressure may be used. As at least one organic solvent with a low boiling point methanol, ethanol, 1-propanol, 2-propanol, tert-butanol, actone, diethyl ether, tert-butylmethyl ether, tetrahydrofuran, chloroform, 1,2-dichlorethane, methylene chloride, cyclohexane, ethyl acetate, n-hexane, n-heptane and/or methyl ethyl ketone for example may be used. Preferably, methanol, ethanol, 1-propanol and/or 2-propanol is/are used as at least one solvent with a low boiling point. As at least one organic solvent with a middle boiling point 1-methoxy-2-propanol, 1-butanol, dibutyl ether, 1,4-dioxan, 3-methyl-1-butanol, 4-hydroxy-4-methyl-2-pentanone, methylisobutylketone and/or toluol for example may be used. Preferably, 1-methoxy-2-propanol and/or 4-hydroxy-4-methyl-2-pentanone is/are used as at least one solvent with a middle boiling point.
The weight ratio of the at least one solvent with a low boiling point to the at least one solvent with a middle boiling point is preferably 1:1, further preferably 1:1.4, more preferably 1:1.5 and most preferably 1:1.7.
As at least one solvent at least one organic solvent with a low boiling point, at least one solvent with a middle boiling point and water may be used. The weight ratio of the at least one solvent with a low boiling point to the at least one solvent with a middle boiling point to water is preferably 2:7:1, further preferably 2.5:6.5:1, further preferably 3:6:1, more preferably 3:5:1 and most preferably 3:6:1.
The at least one primer coating composition may comprise optionally at least one additive. The at least one additive may comprise at least one dispersing agent, at least one anti-settling agent, at least one wetting agent, at least one biocide, at least one UV-absorber or mixtures thereof.
To modify the at least one primer coating composition to exhibit an antifouling, an antibacterial and/or an antiviral effect the at least one hard coating preferably comprises at least one additive. The at least one additive may be selected of at least one of the group consisting of at least one metal, at least one metal oxide, at least one metal hydroxide, at least one metal oxide hydrate, at least one organic component acting as antifouling, antibacterial and/or antifungal agent and at least one coordination complex acting as antifouling, antibacterial and/or antifungal agent, as described above in connection with the modification of the at least one hard coating composition.
The at least one additive may be present in the at least one primer coating composition preferably in an amount from a range of from 0.00001% by weight to 2.4% by weight, further preferably in an amount from a range of from 0.001% by weight to 1.9% by weight, more preferably in an amount from a range of from 0.01% by weight to 1.7% by weight and most preferably in an amount from a range of from 0.1% by weight to 1.1% by weight, each based on the total solid content of the at least one primer coating composition. The amounts mentioned before apply with regard to one type of additive as well as with regard to a mixture of different additives.
In case the at least one additive is in the form of particles, preferably their particle size is in the range from 1 nm to 800 nm, further preferably from 2 nm to 400 nm, more preferably from 3 nm to 100 nm and most preferably from 4 nm to 50 nm. Preferably at least a part of the particles is not completely embedded in the at least one primer coating.
The components of the at least one primer coating composition resulting in at least one primer coating are used in that they add to 100% by weight, based on the total weight of the at least one primer coating composition.
The at least one primer coating composition comprising the components i) to iii), i.e. the at least one dispersion, the at least one solvent and optionally the at least one additive, after application on the uncoated or precoated edge surface preferably of an edged lens, optionally on the uncoated or precoated front surface and optionally on the uncoated or precoated back surface each of a spectacle lens substrate or an edge lens, further after drying and curing results in at least one primer coating. The curing and/or hardening of the at least one primer coating composition is performed via the direct application of heat of by the application of at least one electromagnetic pulse, described below.
The at least one primer coating composition resulting in at least one primer coating is preferably applied to the edged surface preferably of an edged lens by means of a brush and/or a doctor blade. The at least one primer coating composition resulting in at least one primer coating is optionally applied to the uncoated or precoated front surface and/or the uncoated or precoated back surface each of the spectacle lens substrate or the edged lens preferably by dip coating or by spin coating. In case the at least one primer coating composition resulting in at least one primer coating is applied simultaneously to the uncoated or precoated edged surface, the uncoated or precoated front surface and the uncoated or precoated back surface, the at least one primer coating composition is preferably applied via dip coating.

Alternatively or additionally to the before mentioned at least one primer coating, the coating of the spectacle lens may comprise at least one primer coating based on at least one primer coating composition preferably comprising
i) at least one aqueous aliphatic, cycloaliphatic, aromatic or heteroaromatic polyurethane dispersion, at least one aqueous aliphatic, cycloaliphatic, aromatic or heteroaromatic polyurea dispersion, at least one aqueous aliphatic, cycloaliphatic, aromatic or heteroaromatic polyurethane-polyurea dispersion and/or at least one aqueous aliphatic, cycloaliphatic, aromatic or heteroaromatic polyester dispersion, preferably at least one aqueous aliphatic polyurethane dispersion or at least one aqueous aliphatic polyester dispersion and more preferably at least one aqueous aliphatic polyurethane dispersion,
ii) at least one solvent,
iii) at least one base, and
iv) optionally at least one additive.
The at least one aqueous aliphatic, cycloaliphatic, aromatic or heteroaromatic polyurethane dispersion, at least one aqueous aliphatic, cycloaliphatic, aromatic or heteroaromatic polyurea dispersion, at least one aqueous aliphatic, cycloaliphatic, aromatic or heteroaromatic polyurethane-polyurea dispersion and/or at least one aqueous aliphatic, cycloaliphatic, aromatic or heteroaromatic polyester dispersion is/are present in the at least one primer coating composition in a total amount selected from a range preferably of from 2% by weight to 31% by weight, further preferably of from 4% by weight to 26% by weight, further preferably of from 5% by weight to 21% by weight, more preferably of from 6% by weight to 20% by weight and most preferably of from 7% by weight to 19% by weight, each based on the total weight of the at least one primer coating composition. The total amount comprises the amount of only one of the dispersions mentioned before or a mixture thereof. The at least one primer coating composition comprises preferably at least one aqueous polyurethane dispersion, wherein the polyurethane comprises a polyester unit as a spacer or the polyurethane dispersion is a polyurethane-polyurea dispersion, characterized by the occurrence of both urethane and urea groups in a macromolecular chain of the polyurethane-polyurea. Such polyurethane dispersions are described for example in WO 94/17116 A1, in particular in WO 94/17116 A1, page 7, lines 11 to 33. The aqueous polyurethane dispersion may be blended with anionically stabilized acrylic emulsions, as described in WO 94/17116 A1, in particular in WO 94/17116 A1, page 7, lines 33 to 35. According to WO 94/17116 A1, page 7, lines 11 to 33, an aqueous polyurethane dispersion typically is a polyurethane-polyurea, i.e., a polymer characterized by the occurrence of both urethane and urea groups in a macromolecular chain. The aqueous polyurethane dispersion may be blended with anionically stabilized acrylic emulsions as mentioned in WO 94/17166 A1, in particular in WO 94/17116 A1, page 7, lines 33 to 35.
The at least one solvent is present in the at least one primer coating composition in an amount preferably from a range of from 69% by weight to 98% by weight, further preferable of from 73% by weight to 96% by weight, more preferably of from 76% by weight to 94% by weight and most preferably of from 79% by weight to 93% by weight, each based on the total weight of the at least one primer coating composition. The amounts mentioned before apply with regard to one type of solvent as well as with regard to a mixture of different solvents.
As at least one solvent preferably at least one organic solvent with a low boiling point of < 100°C under normal pressure and at least one organic solvent with a middle boiling of 100°C to 150°C under normal pressure may be used. As at least one organic solvent with a low boiling point methanol, ethanol, 1-propanol, 2-propanol, tert-butanol, actone, diethyl ether, tert-butylmethyl ether, tetrahydrofuran, chloroform, 1,2-dichlorethane, methylene chloride, cyclohexane, ethyl acetate, n-hexane, n-heptane and/or methyl ethyl ketone for example may be used. Preferably, methanol, ethanol, 1-propanol and/or 2-propanol are used as at least one solvent with a low boiling point. As at least one organic solvent with a middle boiling point 1-methoxy-2-propanol, 1-butanol, dibutyl ether, 1,4-dioxan, 3-methyl-1-butanol, 4-hydroxy-4-methyl-2-pentanone, methylisobutylketone and/or toluol for example may be used. Preferably, 1-methoxy-2-propanol and/or 4-hydroxy-4-methyl-2-pentanone is/are used as at least one solvent with a middle boiling point.
The weight ratio of the at least one solvent with a low boiling point to the at least one solvent with a middle boiling point is preferably 1:1, further preferably 1:1.4, more preferably 1:1.5 and most preferably 1:1.7.
Further, additionally to the at least one solvent with a low boiling point and/or to the at least one solvent with a middle boiling point, the primer coating composition may comprise water. The weight ratio of the at least one solvent with a low boiling point to the at least one solvent with a middle boiling point to water is preferably 2:7:1, further preferably 2.5:6.5:1, further preferably 3:6:1, more preferably 3:5:1 and most preferably 3:6:1.
Further, the primer coating composition comprises at least one base, which confers a buffering effect with respect to the pH value to the at least one primer coating resulting from that primer coating composition. The at least one base preferably retards, more preferably inhibits an acidic component to come into contact with an adjacent layer, preferably an adjacent layer which is located nearer or next or adjacent to the spectacle lens substrate. The primer coating composition comprises the at least one base in an amount in the range of preferably from 0.1% by weight to 3.2% by weight, further preferably from 0.2% by weight to 2.8% by weight, further preferably from 0.3% by weight to 2.4% by weight, more preferably from 0.4% by weight to 1.9% by weight and most preferably from 0.5% by weight to 1.6% by weight, each based on the total weight of the primer coating composition. The amounts given before apply to the use of one type of base as well as to the use of a mixture of different bases. The primer coating composition may comprise as at least one base for example imidazole, 1-methylimidazole, 2-methylimidazole, 4-methylimidazole, 2,5-dimethylimidazole, 4-hydroxymethylimidazole, pyrazole, 1,2,3-triazole, 1,2,4-triazole, tetrazole, pentazole, pyrrole, pyrrolidine, pyridine, 4-aminopyridine, 4-methylpyridine, 4-methoxypyridine, 2,4,6-trimethylpyridine, piperidine, piperazine, triethylamine, di-isopropyl amine, di-isobutyl amine, caustic soda and/or caustic potash. Preferably, the primer coating composition comprises at least one base selected from the group consisting of 2-methlyimidazole, imidazole, 1-methylimidazole, 4-methylimidazole, 2,5-dimethylimidazole, triethylamine and caustic soda, more preferably at least one base selected from the group consisting of 2-methylimidazole, 1-methylimidazole, 4-methylimidazole and caustic soda. Most preferably, the primer coating composition comprises at least one base selected from the group consisting of 2-methylimidazole and 1-methylimidazole in an amount of a range from 0.1% by weight to 2% by weight, preferably from 0.3% by weight to 1.5% by weight, each based on the total weight the primer coating composition. The amounts mentioned before apply to the use of a mixture of 2-methylimidazole and 1-methylimidazole as well as to the use of 2-methylimidazole or to the use of 1-methylimidazole.
The primer coating composition may comprise optionally at least one additive. The at least one additive may comprise at least one dispersing agent, at least one anti-settling agent, at least one wetting agent, at least one biocide, at least one UV-absorber or mixtures thereof. To modify the at least one primer coating composition to exhibit an antifouling, an antibacterial and/or an antiviral effect the at least one hard coating preferably comprises at least one additive. The at least one additive may be selected of at least one of the group consisting of at least one metal, at least one metal oxide, at least one metal hydroxide, at least one metal oxide hydrate, at least one organic component acting as antifouling, antibacterial and/or antifungal agent and at least one coordination complex acting as antifouling, antibacterial and/or antifungal agent, as described above in connection with the modification of the at least one hard coating composition.
The at least one additive may be present in the at least one primer coating composition preferably in an amount from a range of from 0.00001% by weight to 2.4% by weight, further preferably in an amount from a range of from 0.001% by weight to 1.9% by weight, more preferably in an amount from a range of from 0.01% by weight to 1.7% by weight and most preferably in an amount from a range of from 0.1% by weight to 1.1% by weight, each based on the total solid content of the at least one primer coating composition. The amounts mentioned before apply with regard to one type of additive as well as with regard to a mixture of different additives.
In case the at least one additive is in the form of particles, preferably their particle size is in the range of from 1 nm to 800 nm, further preferably from 2 nm to 400 nm, more preferably from 3 nm to 100 nm and most preferably from 4 nm to 50 nm. Preferably at least a part of the particles is not completely embedded in the at least one primer coating.
The components of the primer coating composition resulting in at least one primer coating are used in that they add to 100% by weight based on the total weight of the primer coating composition.
The primer coating composition comprising the components i) to iv), i.e. the at least one dispersion, the at least one solvent, the at least one base and optionally the at least one additive, after application to the uncoated or precoated edge surface preferably of an edged lens, optionally to the uncoated or precoated front surface and optionally to the uncoated or precoated back surface each of a spectacle lens substrate or an edged lens, after drying and curing results in at least one primer coating. The curing and/or hardening of the at least one primer coating composition is preferably performed by the direct application of heat or the application of at least one electromagnetic pulse, described in detail below.
The primer coating composition resulting in at least one primer coating is preferably applied to the uncoated or precoated edge surface preferably of an edged lens via at least one brush and/or at least one doctor blade. The primer coating composition is optionally applied the uncoated or precoated front surface and/or the uncoated or precoated back surface each of spectacle lens substrate or an edged lens preferably by dip coating or spin coating. In case the at least one primer coating composition is applied simultaneously to the uncoated or precoated edge surface, the uncoated or precoated front surface and the uncoated or precoated back surface, preferably the at least one primer coating is applied via dip coating.

The at least one primer coating composition and/or the at least one hard coating composition preferably are cured and/or hardened by applying at least one electromagnetic pulse or by irradiation with at least one single electromagnetic pulse to result in the respective primer coating or the respective hard coating. The at least one single electromagnetic pulse preferably is applied from at least one flash lamp. Preferably the at least one flash lamp is a flash lamp filled with a gas selected from xenon, krypton and/or argon, preferably xenon.

The at least one single electromagnetic pulse applied from at least one of the before mentioned electromagnetic sources preferably has a wavelength in the range from 100 nm to 1800 nm, more preferably in the range from 150 nm to 1300 nm, most preferably in the range from 200 nm to 1000 nm. The at least one single electromagnetic pulse also preferably has a wavelength in the range from 350 nm to 1000 nm, more preferably in the range from 400 nm to 800 nm, most preferably in the range from 420 nm to 700 nm.
"Single electromagnetic pulse" means the light that is delivered by at least one of the above-mentioned electromagnetic sources and applied to an uncoated or precoated edge surface, an uncoated or precoated front surface and/or an uncoated or precoated back surface each comprising at least one primer coating composition and/or at least one hard coating composition. The at least one single electromagnetic pulse may be applied in one of the wavelength ranges defined above. The at least one single electromagnetic pulse preferably has a defined duration, i.e. a defined envelope. The envelope of the at least one single electromagnetic pulse is defined as the period of time in which the at least one single electromagnetic pulse is applied to at least one of the uncoated or precoated surfaces mentioned before. The envelope may be in a range from 50 µs to 200 ms, preferably in a range from 100 µs to 150 ms. Each single electromagnetic pulse may comprise at least two micro-pulses, each of the at least two micro-pulses having a defined duration within the envelope of each single electromagnetic pulse. The duration of the at least two micro-pulses within the envelope of a single electromagnetic pulse may be identical to or different from each other. The percentage of the duration of all the micro-pulses within the envelope of a single electromagnetic pulse is defined as the duty cycle of the single electromagnetic pulse. Further, the at least one single electromagnetic pulse or at least one micro-pulse has a defined peak intensity. The peak intensity is defined as the rate at which light energy is applied per unit time to a unit area of the at least one coating precursor material by one single electromagnetic pulse or one micro-pulse within a single electromagnetic pulse. The peak intensity is preferably in the range from 0.01 W/cm² to 200 W/cm², further preferably in the range from 0.1 W/cm² to 150 W/cm², more preferably from 0.5 W/cm² to 100 W/cm² and most preferably from 1 W/cm² to 60 W/cm². The peak intensity of at least two micro-pulses within the envelope of a single electromagnetic pulse may be identical to or different from each other. Preferably the peak intensity of the at least two micro-pulses within the envelope of a single electromagnetic pulse is identical to each other. The peak intensity between two consecutive micro-pulses within the envelope of a single electromagnetic pulse does not need to be zero or does not need to be constant or does not need to be equal. If necessary, each single electromagnetic pulse may be repeated to provide an electromagnetic pulse train for hardening and/or curing the at least one primer coating composition and/or the at least one hard coating composition both being applied to an uncoated or precoated edge surface, an uncoated or precoated front surface and/or an uncoated or precoated back surface, the at least one hard coating composition being the outermost composition thereof. Within the electromagnetic pulse train, each single electromagnetic pulse may be repeated at least twice and up to 1000 times, preferably each single electromagnetic pulse is repeated between 2 and 100 times. Within an electromagnetic pulse train, preferably an identical single electromagnetic pulse is repeated. Within an electromagnetic pulse train, the envelope of each single electromagnetic pulse may be identical to or different from each other. Preferably, within an electromagnetic pulse train, the envelope of each single electromagnetic pulse is identical. Within an electromagnetic pulse train, each single electromagnetic pulse may comprise at least two micro-pulses, the at least two micro-pulses may be identical to or different from each other with respect to their peak intensity, duration and/or duty cycle. Preferably, within an electromagnetic pulse train, each single electromagnetic pulse may comprise at least two micro-pulses, the at least two micro-pulses being identical to each other with respect to their peak intensity, duration and/or duty cycle. Within the electromagnetic pulse train comprising at least two single electromagnetic pulses, the at least two single electromagnetic pulses may be repeated with a repetition rate in a range from 0.1 Hz to 5 Hz, preferably from 0.2 Hz to 4 Hz, further preferably from 0.3 Hz to 3.5 Hz and most preferably from 0.4 to 2 Hz. The peak intensity of at least one single electromagnetic pulse within the envelope of the at least one single electromagnetic pulse may progressively decrease within the envelope and/or with each micro-pulse within the at least one single electromagnetic pulse. For example, this decrease can be due to limitations of the charged capacitors of the electromagnetic source used for generating the at least one single electromagnetic pulse. The dose applied by at least one single electromagnetic pulse to the uncoated or precoated edge surface, the uncoated or precoated front surface, the uncoated or precoated back surface, each comprising at least one primer coating composition and/or at least one hard coating composition is the average intensity delivered with each single electromagnetic pulse over the total duration of the envelope where each single electromagnetic pulse may or may not comprise at least two micro-pulses each delivering a discrete amount of intensity. The dose applied by at least one single electromagnetic pulse may preferably be within the range from 0.001 J/cm² to 50 J/cm², further preferably from 0.1 J/cm² to 30 J/cm², more preferably from 1 J/cm² to 20 J/cm² and most preferably from 2.0 J/cm² to 15 J/cm². Particularly preferably, the dose applied is within a range from 3 J/cm² to 8 J/cm².
The total process duration, i.e. the total time needed for hardening and/or curing the at least one primer coating and/or the at least one hard coating composition applied on an uncoated or precoated edge surface, an uncoated or precoated front surface and/or an uncoated or precoated back surface by using at least one single electromagnetic pulse as described above, lies within a range preferably from 100 µs to 10 min, further preferably from 300 µs to 7 min, more preferably from 500 µs to 5 min and most preferably from 1 ms to 3 min.
Prior to the application of at least one single electromagnetic pulses, the at least one primer coating composition and/or the at least one hard coating composition may be dried or precured, preferably under atmosphere for 5 minutes.
The at least one primer coating composition and the at least one hard coating composition may simultaneously be cured and/or hardened by the application of at least one single electromagnetic pulse. The at least one primer coating composition and/or the at least one hard coating composition may be dried or precured, preferably under atmosphere for 5 minutes at 60°C.
The uncoated or precoated edge surface and the uncoated or precoated front surface and/or the uncoated or precoated back surface each may comprise at least one primer coating composition and/or at least one hard coating composition. The curing and/or hardening of the at least one primer coating composition and/or the at least one hard composition applied to at least two of the before mentioned surfaces is simultaneously possible by the application of at least one single electromagnetic pulse, optionally after the at least one primer coating composition and/or the at least one hard coating composition has/have been dried or precured, preferably under atmosphere for 5 minutes at 60°C. The simultaneous curing and/or hardening is possible even if the at least one single electromagnetic pulse is applied only to one of the before mentioned surfaces, e.g. to the uncoated or precoated front surface comprising the at least one primer coating composition and/or the at least one hard coating composition. The simultaneous hardening and/or curing of the at least one primer coating composition and/or the at least one hard coating composition applied on at least two of the before mentioned surfaces is thought to be due to a combination of multiple factors. The main factor is the transfer of energy from the at least one single electromagnetic pulse to the at least two before mentioned surfaces of the spectacle lens substrate due to minor differences in the transparency of the spectacle lens substrate and the at least one primer coating composition and/or the at least one hard coating composition. For example, the spectacle lens substrate may have a transparency in a wavelength range of from 400 nm to 800 nm and the at least one primer coating composition and/or the at least one hard coating composition each may have a transparency in a wavelength range of from 100 nm to 1100 nm. In this example, the visible part of the light of from 400 nm to 800 nm passes through the spectacle lens substrate and the at least one primer coating composition and/or at least one hard coating composition with minimal or almost no absorption, but undergoes multiple reflections at all interfaces, for example between the front surface of the spectacle lens substrate and the at least one primer coating composition and/or from the stage on which the lens comprising the spectacle lens substrate and the at least one primer coating composition and/or the at least one hard coating composition is placed. In addition, in this example, the wavelength range of from 100 nm to <400 nm and of from >800 nm to 1100 nm is mostly absorbed by the spectacle lens substrate. This allows a short instantaneous heating of the spectacle lens substrate higher than its threshold temperature while still not damaging and/or altering the physical and/or chemical and/or mechanical and/or optical properties of the spectacle lens substrate. In addition, the temperature of the spectacle lens substrate is higher than the temperature of the at least one primer coating composition and/or the at least one hard coating composition, which allows the indirect hardening and/or curing of the at least one primer coating composition and/or the at least one hard coating composition by the so heated spectacle lens substrate. In addition, the back reflection of the at least one single electromagnetic pulse from the stage on which the lens is placed also transfers energy to the back surface of the spectacle lens substrate and also contributes in part to the indirect hardening and/or curing of the at least one primer coating composition and/or the at least one hard coating composition on the back surface and/or on the edge surface of the spectacle lens substrate. This combination of the direct energy transfer from the at least one single electromagnetic pulse, the indirect energy transfer from the heated spectacle lens substrate and the indirect energy transfer resulting from the reflection from the stage leads to the hardening and/or curing of the at least one primer coating composition and/or the at least one hard coating composition, preferably irrespective from the surface to which the at least one single electromagnetic pulse is applied. So, the hardening and/or curing of the at least one primer coating composition and/or the at least one hard coating composition applied to at least two surfaces selected from an uncoated or precoated front surface, an uncoated or precoated back surface and an uncoated or precoated edge surface is possible with exposure from only one side. Preferably, the total process duration for hardening and/or curing the at least one primer coating material and/or the at least one hard coating material applied to at least two of the before mentioned surfaces is in a range preferably from 50 µs to 20 min, further preferably from 100 µs to 10 min, more preferably from 500 µs to 5 min, and most preferably from 1 ms to 3 min.

Alternatively to the before mentioned application of at least one single electromagnetic pulse to cure and/or to harden the at least one primer coating composition and/or the at least one hard coating composition, the at least one primer coating composition and/or the at least one hard coating composition may be cured and/or hardened by the direct application of heat, optionally after the drying or precuring under atmosphere. The direct application of heat is preferably under atmosphere. The at least one primer coating composition is preferably dried at a temperature ranging from 20°C to 80°C, further preferably from 23°C to 78°C, more preferably from 35°C to 76°C and most preferably from 45°C to 75°C. The at least one hard coating composition is preferably cured and/or hardened at a temperature ranging from 75°C to 150°C, further preferably from 80°C to 140°C, more preferably from 90°C to 130°C and most preferably from 95°C to 120°C.

Alternatively or additionally to the above mentioned at least one hard coating and alternatively or additionally to the before mentioned at least one primer coating, the uncoated or precoated edge surface, preferably of the edged lens, may comprise at least one antibacterial and/or antiviral coating. The uncoated or precoated front surface and/or the uncoated or the precoated back surface each of a spectacle lens substrate or an edged lens may comprise at least one antibacterial and/or antiviral coating as well. In case, an uncoated or precoated surface comprises optionally at least one primer coating, at least one hard coating as well as at least one antibacterial and/or antiviral coating thereon, preferably comprises the optional at least one primer coating as coating next to the uncoated or precoated surface and the at least one antibacterial and/or antiviral coating as outermost coating thereof. The at least one primer coating and/or the at least one hard coating may be modified to exhibit an antifouling effect, an antibacterial effect and/or an antiviral effect.
The following description of the at least one antibacterial and/or antiviral coating applies to each at least one antibacterial coating applied to the uncoated or precoated edge surface, preferably of an edged lens, optionally applied to the uncoated or precoated front surface and optional applied to the uncoated or precoated back surface, each of a spectacle lens substrate or an uncoated lens.
The at least one antibacterial and/or antiviral coating preferably comprises at least one biocidal component and at least one binding component. Preferably the at least one biocidal component is selected from at least one of the group consisting of at least one metal, at least one metal oxide, at least one metal hydroxide, at least one metal oxide hydrate and at least one metal sulfide. The at least one metal, the at least one metal oxide, the at least one metal hydroxide, the at least one metal oxide hydrate and/or the at least one metal sulfide preferably each comprises or is composed of silver, preferably Ag, AgO, Ag₂O, Ag₂S; copper, preferably Cu, Cu₂O; titanium, preferably TiO, TiO₂, Ti₂O₃, Ti₃O₄; zinc, preferably ZnO; and/or iron, preferably FeO, Fe₂O₃. The at least one biocidal component may comprise at least one metal, at least one metal oxide, at least one metal hydroxide, at least one metal oxide hydrate, at least one metal sulfide or a combination thereof. As at least one metal one metal or a combination of different metals, as at least one metal oxide one type of metal oxide or a combination of different types of metal oxides, as at least one metal hydroxide one type of metal hydroxides or a combination of different types of metal hydroxides, as at least one metal oxide hydrate one type of metal oxide hydrate or a combination of different types of metal oxide hydrates and as at least one metal sulfide one type of metal sulfide or a combination of different types of metal sulfides may be used. Preferably, the at least one biocidal component comprises at least one metal, at least one metal oxide, at least one metal hydroxide, at least one metal oxide hydrate and/or at least one metal sulfide each composed of or comprising silver, preferably Ag, AgO, Ag₂O, Ag₂S; copper, preferably Cu, Cu₂O; and/or zinc, preferably ZnO. Further preferably, the at least one biocidal component comprises at last one metal, at least one metal oxide, at least one metal hydroxide, at least one metal oxide hydrate and/or at least one metal sulfide each composed of or comprising silver, preferably Ag, AgO and/or Ag₂O and/or Cu, preferably Cu₂O. Particularly preferably, the at least one biocidal component comprises at least one metal, at least one metal oxide, at least one metal hydroxide, at least one metal oxide hydrate and/or at least one metal sulfide composed of or comprising silver, preferably Ag, AgO and/or Ag₂O.
The at least one biocidal component preferably has the functionality of oxidation or light induced oxidation via direct contact to achieve the antiviral and/or antibacterial effect of the at least one antibacterial and/or antiviral coating. The at least one binding component preferably has the functionality to ensure or enhance the adhesion of the at least one antibacterial and/or antiviral coating to each adjacent coating. Preferably, the at least one adjacent coating is directly adjacent.
Preferably the at least one binding component is selected from at least one of the group consisting of at least one metal, at least one metal oxide, at least one metal hydroxide, at least one metal oxide hydrate and at least one metal sulfide. The at least one binding component may comprise at least one metal oxide, at least one metal hydroxide, at least one metal oxide hydrate and/or metal sulfide each composed of or comprising silicon, preferably SiO₂; titanium, preferably TiO, TiO₂, Ti₂O₃, Ti₃O₄; aluminum, preferably Al₂O₃; and/or zirconium, preferably ZrO₂. The at least one binding component may comprise at least one metal oxide, at least one metal hydroxide, at least one metal oxide hydrate, at least one metal sulfide or a combination thereof. Further, as at least one metal oxide one type of metal oxide or a combination of different types of metal oxides, as at least one metal hydroxide one type of metal hydroxides or a combination of different types of metal hydroxides, as at least one metal oxide hydrate one type of metal oxide hydrate or a combination of different types of metal oxide hydrates and as at least one metal sulfide one type of metal sulfide or a combination of different types of metal sulfides may be used. Preferably, the at least one binding inorganic component comprises at least one metal oxide, at least one metal hydroxide, at least one metal oxide hydrate and/or at least one metal sulfide each composed of or comprising silicon, preferably SiO₂; titanium, preferably TiO, TiO₂, Ti₂O₃, Ti₃O₄; and/or zirconium, preferably ZrO₂. Further preferably, the at least one binding component comprises at least one metal oxide, at least one metal hydroxide, at least one metal oxide hydrate and/or at least one metal sulfide each composed of or comprising silicon, preferably SiO₂; and/or titanium, preferably TiO, TiO₂, Ti₂O₃, Ti₃O₄. Particularly preferably, the at least one binding component comprises at least one metal oxide, at least one metal hydroxide and/or metal oxide hydrate each composed of or comprising silicon, preferably SiO₂.
Preferably, the at least one antibacterial and/or antiviral coating do not comprise the identical biocidal component and binding component. The at least one metal oxide, the at least one metal hydroxide, the at least one metal oxide hydrate and/or the at least one metal sulfide of the at least one biocidal component and of the at least one binding component are preferably not identical. However, in case the at least one biocidal component and the at least one binding component comprise for example at least one metal oxide composed of or comprising the identical metal, for example titanium, it is preferred that the at least one biocidal component and the at least one binding component comprise different types of the at least one metal oxides, for example, TiO₂ and TiO. Alternatively, the at least one biocidal component and the at least one binding component may comprise for example the identical metal oxide but in a different crystal structure.
To ensure the antibacterial and/or antiviral effect of the at least one antibacterial and/or antiviral coating, the at least one antibacterial and/or antiviral coating preferably comprises the at least one biocidal component in an amount of a range from 1 % by weight to 90 % by weight, further preferably from 10 % by weight to 80 % by weight, more preferably from 15 % by weight to 60 % by weight, and most preferably from 20 % by weight to 40 % by weight, each based on the total weight of the at least one antibacterial and/or antiviral coating. The amounts for the at least one biocidal component given before apply for the use of one type of biocidal component as well as for the use of a combination of different types of biocidal components. One type of biocidal component may comprise biocidal components based the identical or a different metal ion.
To simultaneously ensure a good adhesion of the at least one antibacterial and/or antiviral coating to at least one adjacent layer, the at least one antibacterial and/or antiviral coating preferably comprises the at least one binding component in an amount of a range from 10 % by weight to 99 % by weight, further preferably from 20 % by weight to 90 % by weight, more preferably from 40 % by weight to 85 % by weight and particularly preferably from 60 % by weight to 80 % by weight, each based on the total weight of the at least one antibacterial and/or antiviral coating. The amounts for the at least one binding component mentioned before apply for the use of one type of binding component as well as for the use of a combination of different types of binding components. One type of binding component may comprise binding components based on the identical or a different metal ion.
The respective amounts of the at least one biocidal component and the at least one binding component given above are preferably determined by a scanning electron microscope equipped with energy dispersive X-ray spectroscopy.
The average thickness of the at least one antibacterial and/or antiviral coating preferably lies in a range of from 1 nm to 100 nm, further preferably from 3 nm to 60 nm, more preferably from 4 nm to 40 nm and most preferably from 5 nm to 20 nm. The physical thickness of the at least one antibacterial and/or antiviral coating preferably is determined by a scanning electron microscope photograph of a cross-section of the spectacle lens comprising a spectacle lens substrate or edged lens and at least one antibacterial and/or antiviral coating. The physical thickness of the at least one antibacterial and/or antiviral coating is therein determined in at least three positions and the arithmetic average is formed thereof.

The at least one antibacterial and/or antiviral coating preferably is applied to the uncoated or precoated edged surface, preferably of the edged lens, optionally to the uncoated or precoated front surface and optionally to the uncoated or precoated back surface each of a spectacle lens substrate or an edged lens, preferably by co-deposition under vacuum. The co-deposition may be i) an optionally ion-beam assisted co-evaporation; ii) an ion-beam co-sputtering; iii) a cathode co-sputtering and/or iv) a plasma-assisted chemical vapor co-deposition. Preferably the co-deposition of the at least one antibacterial and/or antiviral coating is a co-evaporation, optionally ion-beam assisted. For the co-deposition under vacuum resulting in the at least one antibacterial and/or antiviral coating preferably at least two deposition sources are operated simultaneously. Preferably, at least one of the at least two deposition sources is used to deposit the at least one biocidal component and at least one of the at least two deposition sources is used to deposit the at least one binding component. The at least two deposition sources for co-depositing the at least one biocidal component and the at least one binding component forming the at least one antibacterial and/or antiviral coating may be of the identical type or may be of different types of deposition sources. Further, the at least two deposition sources for co-depositing the at least one biocidal component and the at least one binding component forming the at least one antibacterial and/or antiviral coating may be of the identical type in case the identical method selected from the above mentioned methods i) to iv) is used or may be of different types of deposition sources, both in case the identical method selected from the above mentioned methods i) to iv) as well as in case different methods selected from the above mentioned methods i) to iv) is used. In case the identical method according to any one of the methods i) to iv) mentioned above is used for co-deposition, for example, in case the at least one antibacterial and/or antiviral coating is manufactured according to the co-deposition method i) mentioned above, i.e. by optionally ion-beam assisted co-evaporation, for example the at least one evaporation source to deposit the at least one biocidal component may be at least one thermal evaporator and the at least one evaporation source to deposit the at least one binding component may at least one electron beam gun. Alternatively, for example, the at least one evaporation source to deposit the at least one biocidal component may be at least one electron beam gun and the at least one evaporation source to deposit the at least one binding component may at least one thermal evaporator. Further, for example, the at least one evaporation source to deposit the at least one biocidal component and the at least one evaporation source to deposit the at least one binding component may be of identical type.
In case at least two biocidal inorganic components are to be co-deposited, the at least two deposition sources used therefor may be of identical type or of different type. In case at least two binding inorganic components are to be co-deposited, the at least two deposition sources used therefor may be of identical type or of different type. Further, the method for co-deposition of the at least two biocidal components and/or the method for co-deposition of the at least two binding components each according to any one of the methods i) to iv) mentioned above may be of identical type or at least two different methods may be used.
Irrespective of the fact if the at least two deposition sources used are of identical type or of different type, the co-deposition of all components to be deposited simultaneously is preferred.
The described co-deposition preferably is an ion-assisted co-deposition. Ion-assisted co-deposition preferably means that further simultaneously to the co-deposition the surface to be coated with the at least one antibacterial and/or antiviral coating is bombarded with at least one ion-beam. The at least one ion-beam may be produced by at least one ion gun emitting for example gas ions of Ar⁺, Ar₂⁺, O₂⁺ and/or N₂⁺.
To obtain a consistent and durable antibacterial and/or antiviral effect of the at least one antibacterial and/or antiviral coating, which preferably shows a very good adhesion to at least one adjacent coating, the at least one biocidal inorganic component and the at least one binding component preferably are co-deposited simultaneously to form a uniform coating layer.

Alternatively or additionally to the before mentioned at least one primer coating, alternatively or additionally to the before mentioned at least one hard coating, alternatively or additionally to the before mentioned at least one antibacterial and/or antiviral coating, the uncoated or precoated edge surface, preferably of an edged lens, optionally the uncoated or precoated front surface and optionally the uncoated or precoated back surface each of a spectacle lens substrate or an edged lens comprises at least one antireflective coating. In case an uncoated or precoated surface comprises at least one antibacterial and/or antiviral coating and at least one antireflective coating, preferably the at least one antibacterial and/or antiviral coating is the outermost coating thereof and further preferably the at least one antibacterial and/or antiviral coating is part of the antireflective coating. For the alternative of being part of the at least one antireflective coating, preferably at least one multilayer antireflective coating, the at least one antibacterial and/or antiviral coating is the outermost coating of that antireflective coating stack, named modified antireflective coating henceforth. In case an uncoated or precoated surface comprises optionally at least one primer coating, at least one hard coating and at least one antireflective coating, optionally modified, the at least one primer coating is the coating next to the respective uncoated or precoated surface to be coated and the at least one antireflective coating is the outermost coating thereof. The at least one primer coating, the at least one hard coating and/or the at least one antireflective coating may be modified to show an antifouling, an antibacterial and/or an antiviral effect.
The following description of the at least one antireflective coating, optionally modified, applies to at least one antireflective coating applied to the uncoated or precoated edge surface, preferably of an edged lens, optionally applied to the uncoated or precoated front surface and optionally applied to the uncoated or precoated back surface each of a spectacle lens substrate or an edged lens.
The at least one antireflective coating preferably comprises alternating discrete metal oxide, metal hydroxide and/or metal oxide hydrate layers composed of or comprising aluminum, silicon, zirconium, titanium, yttrium, tantalum, neodymium, lanthanum, niobium and/or praseodymium. The at least one antireflective coating preferably comprises at least one layer of a metal oxide, metal hydroxide and/or metal oxide hydrate layer composed of or comprising silicon, which preferably forms the outermost layer of the antireflective coating. The antireflective coating typically comprises a coating stack of at least one layer with a high refractive index (HRI) and of at least one layer with a low refractive index (LRI). There is no limitation for the number of layers. However, from the perspective of broadband reflection reduction, the layer total number in the antireflective coating is preferably higher than or equal to 3, further preferably higher than or equal to 5, and lower than or equal to 9. Preferably, the HRI layers have a physical thickness ranging from 10 to 120 nm and the LRI layers have a physical thickness ranging from 10 to 100 nm. The at least one antireflective coating preferably has a total layer thickness from a range from 100 nm to 1000 nm, preferably from a range from 110 nm to 800 nm, further preferably from a range from 120 nm to 750 nm, more preferably from a range from 130 nm to 700 nm and most preferably from a range from 140 nm to 500 nm. The at least one antireflective coating may be designed with respect to the desired optical properties thereof preferably by using the software OptiLayer, version 12.37, of company OptiLayer GmbH, 85748 Garching b. München, or the software Essential MacLeod, version 11.00.541, of company Thin Film Center Inc., 2745 E Via Rotunda, Tucson, AZ USA. For designing the at least one antireflective coating, the respective refractive indices of the layer materials preferably are assumed to be wavelength dependent. In case the antireflective coating comprises at least one layer of SiO₂ and at least one layer of TiO₂, the designing the antireflective coating preferably is based on a refractive index for TiO₂ of n= 2.420 at 550 nm and a refractive index for SiO₂ of n = 1.468 at 550 nm.
The at least one antireflective coating may comprise the layer sequence and the layer thickness indicated in EP 2 437 084 A1, in figures 3 and 5, in each case between the superhydrophobic layer and the hard lacquer layer or the layer sequence and the layer thicknesses disclosed in paragraph [0056] of EP 2 801 846 A1.
In one embodiment, the at least one antireflective coating may comprise at least one electrically conductive or semiconductive coating. The at least one electrically conductive or semiconductive coating may comprise, for example, a layer composed of or comprising indium tin oxide ((In₂O₃)_{0.9} (SnO₂)_{0.1}; ITO), fluorine tin oxide (SnO₂:F; FTO), aluminum zinc oxide (ZnO:AI; AZO) and/or antimony tin oxide (SnO₂:Sb; ATO). Preferably, the electrically conductive or semiconductive coating comprises a coating composed of or comprising ITO or composed of or comprising FTO. An electrically conductive or semiconductive coating arranged as the outermost coating of the at least one antireflective coating preferably reduces or avoids the static charging of a spectacle lens. This in turn facilitates the cleaning of the spectacle lens.
Preferably the at least one antireflective coating is deposited under vacuum. The deposition may be i) an optionally ion-beam assisted evaporation; ii) an ion-beam sputtering; iii) a cathode sputtering and/or iv) a plasma-assisted chemical vapor deposition. Preferably, the at least one antireflective coating is applied via evaporation under vacuum, optionally ion-beam assisted, as described above. As mentioned above, to exhibit an antifouling effect, an antibacterial effect and/or an antiviral effect, the at least one antireflective coating is preferably modified in that at least one coating thereof, preferably the outermost coating thereof, comprises the at least one antibacterial and/or antiviral coating described above. Preferably, the at least one antibacterial and/or antiviral coating of the at least one modified antireflective coating does not significantly affect the desired optical properties of the at least one modified antireflective coating. In particular, the thickness of the at least one antibacterial and/or antiviral coating may be a compromise between the long term antibacterial and/or antiviral effect of the at least one modified antireflective coating and the desired optical properties of the spectacle lens.

Alternatively of additionally to the at least one primer coating mentioned before, alternatively or additionally to the at least one hard coating mentioned before, alternatively or additionally to the at least one antireflective coating mentioned before, each coating optionally being modified to show an antifouling effect, an antibacterial effect and/or an antiviral effect, alternatively or additionally to the at least one antibacterial and/or antiviral coating mentioned before, the uncoated or precoated edge surface, preferably of an edged lens, may comprise at least one mirror coating. The uncoated or precoated front surface and/or the uncoated or precoated back surface each of a spectacle lens substrate or an edged lens may comprise at least one mirror coating as well. Each of the before mentioned modifyable coatings may comprise at least one additive to confer antifouling, antibacterial and/or antiviral activity to the respective coating, as described above. In case the edged lens comprises at least two modified coating the at least one additive or the at least one biocidal component of each may be identical or different to each other.
The following description of the at least one mirror coating applies to at least one mirror coating applied to the uncoated or precoated edge surface, preferably of an edged lens, optionally applied to the uncoated or precoated front surface and optionally applied to the uncoated or precoated back surface each of a spectacle lens substrate or an edged lens.
The at least one mirror coating preferably comprises at least one semitransparent metal coating. The at least one semitransparent metal coating preferably comprises an aluminum layer, a chromium layer, a gold layer and/or a silver layer. The layer thickness of the semitransparent metal coating is preferably within a range of from 4 nm to 48 nm, more preferably within a range of from 8 nm to 41 nm and most preferably within a range of from 17 nm to 33 nm.
The at least one semitransparent metal coating is preferably deposited under vacuum. The deposition may be i) an optionally ion-beam assisted evaporation; ii) an ion-beam sputtering; iii) a cathode sputtering and/or iv) a plasma-assisted chemical vapor deposition. Preferably, the at least one mirror coating is applied via evaporation under vacuum, optionally ion-beam assisted, as described above. Preferably, the at last one mirror coating inherently exhibiting an antifouling effect, an antibacterial effect and/or an antiviral effect is the outermost coating of an edged lens or a spectacle lens. Further preferably, the edged lens comprises at least one mirror coating inherently exhibiting an antifouling effect, an antibacterial effect and/or an antiviral effect as outermost coating on the edge surface only, or as outermost coating on the edge surface and as outermost coating on the front surface and optionally as outermost coating on the back surface.
In case the at least one mirror coating does not inherently exhibit an antifouling effect, an antibacterial effect and/or an antiviral effect, such an at least one mirror coating may be modified to exhibit an antifouling effect, an antibacterial effect and/or an antiviral effect for example by applying at least one modified clean coat layer as outermost coating. The additional at least one modified clean coating is described below.

Alternatively or additionally to the before mentioned at least one primer coating, alternatively or additionally to the before mentioned at least one hard coating, alternatively or additionally to the before mentioned at least one antireflective coating, each coating optionally being modified to show an antifouling, antibacterial and/or antiviral effect, alternatively or additionally to the before mentioned at least one antibacterial and/or antiviral coating, alternatively or additionally to the before mentioned at least one mirror coating, the uncoated or precoated edge surface, preferably of an edged lens, comprises at least one clean coat layer. The at least one clean coat layer may be modified to show an antifouling, antibacterial and/or antiviral effect. The uncoated or precoated front surface and/or the uncoated or precoated back surface each of a spectacle lens substrate or an edged lens may comprise as well at least one clean coat layer, optionally modified. The at least one clean coat layer preferably is the outermost coating in the coating sequence of the spectacle lens or edged lens.
The following details given with respect to the at least one clean coat layer apply for at least one clean coat layer applied to the uncoated or precoated edge surface, preferably of an edged lens, as well as for at least one clean coat layer optionally applied to the uncoated or precoated front surface and optionally applied to the uncoated or precoated back surface each of the spectacle lens substrate or the edged lens, the at least one clean coat layer optionally being modified.
The at least one clean coat layer preferably comprises perfluoropolyethers, perfluoroalkyl silanes and/or perfluoroalkyl siloxanes. The at least one clean coat layer is preferably applied by vacuum deposition, described above, further preferably by i) optionally ion-beam assisted evaporation; ii) ion-beam co-sputtering; iii) cathode co-sputtering and/or iv) by plasma-assisted chemical vapor deposition. The at least one clean coat layer is preferably deposited on the surface to be coated by evaporation, optionally ion-beam assisted. The average thickness of the at least one clean coat layer preferably lies in a range from 1 nm to 20 nm, further preferably from 1 nm to 15 nm, more preferably from 1 nm to 10 nm, and particularly preferably from 1 nm to 5 nm. The average thickness of the at least one clean coat layer is preferably determined by at least one scanning electron microscope photograph of a cross-section of the spectacle lens comprising at least a spectacle lens substrate or edged lens and the at least one clean coat layer. In the at least one scanning electron microscope photograph, the physical thickness of the at least one clean coat layer is determined in at least three positions and the arithmetic average is formed thereof. Preferably the water contact angle of the at least one clean coat layer lies in a range of from 90° to 105°, more preferably in a range of from 95° to 100°. The water contact angle preferably is determined by means of an OCA 20 contact angle meter from DataPhysics Instruments or MSA from Krüss using deionized water with a droplet size of 1 and 10µL as liquid.
To modify the at least one clean coat layer to exhibit an antifouling effect, an antibacterial effect and/or an antiviral effect, the at least one clean coat layer preferably is doped with at least one biocidal inorganic component. The at least one biocidal inorganic component preferably is selected from at least one of the group consisting of at least one metal, at least one metal oxide, at least one metal hydroxide, at least one metal oxide hydrate and at least one metal sulfide. The at least one biocidal inorganic component may comprise at least one metal, at least one metal oxide, at least one metal hydroxide, at least one metal oxide hydrate and/or at least one metal sulfide composed of or comprising silver, preferably Ag, AgO, Ag₂O, Ag₂S; copper, preferably Cu, Cu₂O; titanium, preferably TiO, TiO₂, Ti₂O₃, Ti₃O₄; zinc, preferably ZnO; and/or iron, preferably FeO, Fe₂O₃. The at least one biocidal inorganic component may comprise at least one metal, at least one metal oxide, at least one metal hydroxide, at least one metal oxide hydrate, at least one metal sulfide or a combination thereof. As at least one metal one metal or a combination of different metals, as at least one metal oxide one type of metal oxide or a combination of different types of metal oxides, as at least one metal hydroxide one type of metal hydroxides or a combination of different types of metal hydroxides, as at least one metal oxide hydrate one type of metal oxide hydrate or a combination of different types of metal oxide hydrates and as at least one metal sulfide one type of metal sulfide or a combination of different types of metal sulfides may be used. Preferably, the at least one biocidal inorganic component comprises at least one metal, at least one metal oxide, at least one metal hydroxide, at least one metal oxide hydrate and/or at least one metal sulfide composed of or comprising silver, preferably Ag, AgO, Ag₂O, Ag₂S; copper, preferably Cu, Cu₂O; and/or zinc, preferably ZnO. Further preferably, the at least one biocidal inorganic component comprises at last one metal, at least one metal oxide, at least one metal hydroxide and/or at least one metal oxide hydrate composed of or comprising silver, preferably Ag, AgO and/or Ag₂O; and/or composed of or comprising copper, preferably Cu, Cu₂O. Particularly preferably, the at least one biocidal inorganic component comprises at least one metal, at least one metal oxide, at least one metal hydroxide and/or at least one metal oxide hydrate composed of or comprising silver, preferably Ag, AgO and/or Ag₂O.
Preferably, the at least one modified clean coat layer comprises the at least one biocidal inorganic component in the form of particles, preferably distributed within the at least one modified clean coat layer. The particles of the at least one biocidal inorganic component being distributed within the at least one modified clean coat layer does not necessarily mean that all particles are within the at least one modified clean coat layer. At least some of the particles may also be covered by the at least one clean coat layer but protruding the at least one modified clean coat layer or at least some of the particles are distributed uncovered on top of the at least modified clean coat layer. The particle size of the at least one biocidal inorganic component preferably is smaller than the layer thickness of the at least one modified clean coat layer. Preferably, the particle size of the at least one biocidal inorganic component lies within a range from 1 nm to 1 µm, further preferably from 2 nm to 500 nm, more preferably from 3 nm to 300 nm and most preferably from 4 nm to 100 nm. Further preferably, the particle size of the at least one biocidal inorganic component lies within a range from 1 nm to 10 nm, further preferably from 1 nm to 8 nm, more preferably from 1 nm to 5 nm and most preferably from 1 nm to 3 nm.
The at least one modified clean coat layer comprises the at least one biocidal inorganic component in an amount selected from a range preferably from 1% by weight to 70% by weight, further preferably from 1,5% by weight to 50% by weight, more preferably from 2% by weight to 30% by weight, and particularly preferably from 2% by weight to 10% by weight, each based on the total weight of the at least one modified clean coat layer. The amounts for the at least one biocidal inorganic component given before apply for the use of one type of biocidal inorganic component as well as for the use of a combination of different types of biocidal inorganic components. One type of biocidal inorganic components may further comprise the identical or a different metal ion or the identical metal ion, but a different particle size. The amounts of the at least one biocidal inorganic component are preferably determined by a scanning electron microscope equipped with energy dispersive X-ray spectroscopy. The average thickness of the at least one modified clean coat layer preferably lies in a range from 1 nm to 50 nm, further preferably from 1 nm to 30 nm, more preferably from 1 nm to 20 nm, and particularly preferably from 1 nm to 10 nm. The average thickness of the at least one modified clean coat layer is preferably determined analogously to the average thickness of the at least one clean coat layer.

The average thickness of the at least one modified clean coat layer may need to be reduced for reducing or adapting the water contact angle thereof. Preferably the water contact angle of the at least one modified clean coat layer lies in a range of from 90° to 120°, more preferably in a range of from 95° to 115°. With a water contact angle lying in the before mentioned range, the at least one modified clean coat layer maintains the characteristic of the clean coat layer. The water contact angle preferably is determined by means of an OCA 20 contact angle meter from DataPhysics Instruments using deionized water with a droplet size of 1 and 10µL as liquid.
Preferably, the at least one modified clean coat layer is co-deposited under vacuum as described above. Therefore, the at least one biocidal inorganic component and the at least one clean coat layer are preferably co-deposited on the respective surface to be coated. Alternatively, the at least one modified clean coat layer may be applied by dip coating or spin coating. For that alternative the at least one biocidal inorganic component is dispersed in the at least one clean coat composition and optionally at least one solvent.

Alternatively or additionally to the before mentioned at least one primer coating, alternatively or additionally to the before mentioned at least one hard coating, alternatively or additionally to the before mentioned antireflective coating, alternatively or additionally to the before mentioned clean coat layer, each coating mentioned before being optionally modified to exhibit an antifouling effect, an antibacterial effect and/or an antiviral effect, further alternatively or additionally to the before mentioned at least one mirror coating, alternatively or additionally to the before mentioned at least one antibacterial and/or antiviral coating, the uncoated or precoated edge, edge surface or bevel, preferably of an edged lens may comprise at least one anti-fog coating. The at least one anti-fog coating may be modified to confer an antifouling, antibacterial and/or antiviral activity to the resulting modified anti-fog coating. The uncoated or precoated front surface and/or the uncoated or precoated back surface each of the spectacle lens substrate or the edged lens may comprise at least one anti-fog coating as well, optionally at least one modified anti-fog coating. In case the spectacle lens or edged lens comprises at least one clean coat layer and at least one anti-fog coating, both optionally being modified, preferably the at least one clean coat layer is the outermost coating thereof.
The following description of the at least one anti-fog coating, optionally modified, apply to at least one anti-fog coating applied to the uncoated or precoated edge surface, preferably of an edged lens, as well as optionally applied to the uncoated or precoated front surface and optionally applied to the uncoated or precoated back surface each of a spectacle lens substrate or an edged lens.
The at least one anti-fog coating preferably comprises an antifogging resin or surfactant, including highly hydrophilic polymers such as polyvinyl alcohol, (sodium) polyacrylate, or polyurethane comprising hydrophilic groups. For example, commercially available are antifog resins under the names UVAF, AFC-GW, AFC-133P12G, AFC-SW6M and AFC-G*NK from Gelwell Biotech Corp. or Visgard Premium, Visgard Premium SE, Visgard Premium Plus and Visgard Elite from FSI Coating Technologies, Inc. The at least one anti-fog coating preferably is deposited by spin coating or dip coating.
The average thickness of the al least one anti-fog coating is not subject to any special constraint. The average thickness of the at least one anti-fog coating lies preferably in a range of from 1 µm to 20 µm, further preferably in a range of from 2 µm to 17 µm, more preferably in a range of from 3 µm to 15 µm, most preferably in a range of from 4 µm to 12 µm and particularly preferably in a range of from 5 µm to 10 µm. The average thickness is preferably determined by at least one scanning electron microscope photograph of a cross-section of the spectacle lens comprising at least a spectacle lens substrate or edged lens and at least one anti-fog coating. In the at least one scanning electron microscope photograph, the physical thickness of the at least one anti-fog coating is determined in at least three positions and the arithmetic average is formed thereof.
To modify the at least one anti-fog coating to exhibit an antifouling effect, an antibacterial effect and/or an antiviral effect, the at least one anti-fog coating preferably comprises at least one biocidal inorganic component. The at least one modified anti-fog coating may be doped with the at least one biocidal inorganic component. The at least one biocidal inorganic component preferably comprises at least one metal, at least one metal oxide, at least one metal hydroxide, at least one metal oxide hydrate and/or at least one metal sulfide as described above. The at least one modified anti-fog coating may be applied analogously to the before mentioned co-deposition method.

Alternatively or additionally to the before mentioned at least one primer coating, alternatively or additionally to the before mentioned at least one hard coating, alternatively or additionally to the before mentioned antireflective coating, alternatively or additionally to the before mentioned clean coat layer, alternatively or additionally to the before mentioned at least one anti-fog coating, each coating mentioned before being optionally modified to exhibit an antifouling effect, an antibacterial effect and/or an antiviral effect, further alternatively or additionally to the before mentioned at least one mirror coating, alternatively or additionally to the before mentioned at least one antibacterial and/or antiviral coating, the uncoated or precoated edge, edge surface or bevel, preferably of an edged lens may comprise at least one photochromic coating. Preferably, only the uncoated or precoated edge surface, preferably of an edged lens, and optionally the uncoated or precoated front surface of an edged lens or a spectacle lens comprises the least one photochromic coating. If a surface comprises at least one hard coating, optionally at least one primer coating and at least one photochromic coating, preferably the at least one photochromic coating is the coating next, but not necessarily adjacent, to the surface to be coated and the hard coating is the coating furthest away from said surface. In case the spectacle lens comprises at least one hard coating, optionally at least one primer coating, at least one photochromic coating and at least one antibacterial and/or antiviral coating or at least one coating modified to exhibit an antifouling effect, an antibacterial effect and/or an antiviral effect, preferably the at least one photochromic coating is the coating next to, but not necessarily adjacent to, the surface to be coated, whereas the at least one antibacterial and/or antiviral coating or the at least one modified coating is the coating furthest away from said surface.
The at least one photochromic coating may be modified to exhibit an antifouling effect, an antibacterial effect and/or an antiviral effect. In case, the edged lens comprises the at least one modified photochromic coating and further at least one modified coating, the at least one additive responsible for the antifouling effect, for the antibacterial effect and/or for the antiviral effect may be identical to or different from each other.

In case the at least one modified photochromic coating is not the outermost coating, the at least one additive responsible for the antifouling effect, the antibacterial effect and/or the antiviral effect preferably takes effect when the coating on top of the at least one modified photochromic coating is defective so that microorganisms may contact the at least one modified photochromic coating.
The following description of the at least one photochromic coating, optionally modified, apply to at least one photochromic coating applied to the uncoated or precoated edge surface, preferably of an edged lens, as well as optionally applied to the uncoated or precoated front surface and optionally applied to the uncoated or precoated back surface each of a spectacle lens substrate or an edged lens.
The at least one photochromic coating may be based on at least one photochromic composition described in EP 1 433 814 A1, EP 1 602 479 A1 or EP 1 561 571 A1.
EP 1 433 814 A1, in particular EP 1 433 814 A1, claim 1, discloses a photochromic composition comprising (1) 100 parts by weight of radically polymerizable monomers; (2) 0.01 to 20 parts by weight of an amine compound; and (3) 0.01 to 20 parts by weight of a photochromic compound, the radically polymerizable monomers including a radically polymerizable monomer having a silanol group or a group which forms a silanol group by hydrolysis, and/or a radically polymerizable monomer having an isocyanate group. According to EP 1 433 814 A1 to increase adhesion between the photochromic coating resulting from the photochromic composition described therein and a spectacle lens substrate, a radically polymerizable monomer having a silanol group or a group which forms a silanol group by hydrolysis or a radically polymerizable monomer having an isocyanate group is used. Usable monomers are mentioned in EP 1 433 814 A1, page 3, paragraph [0025], to page 7, paragraph [0046]. Additionally, according to EP 1 433 814 A1 the photochromic composition may include other radically polymerizable monomers. As other polymerizable monomers, a combination of a radically polymerizable monomer having a homopolymer L-scale Rockwell hardness of at least 60 ("high-hardness monomer") and a radically polymerizable monomer having a homopolymer L-scale Rockwell hardness of 40 or less ("low-hardness monomer") is preferably used to improve the characteristic properties such as solvent resistance, hardness and heat resistance of the resulting photochromic coating or the photochromic properties thereof such as colour development intensity and fading speed. Examples and explanations with respect to the high-hardness monomers and the low-hardness monomers are given in EP 1 433 814 A1, page 7, paragraph [0052], to page 13, paragraph
[0096]. To improve the balance of the characteristic properties such as solvent resistance, hardness and heat resistance or photochromic properties such as colour development intensity and fading speed of the resulting photochromic coating, the amount of a low-hardness monomer is preferably 5 to 70% by weight and the amount of a high-hardness monomer is preferably 5 to 95% by weight based on the total of all the other radically polymerizable monomers excluding the radically polymerizable monomer having a silanol group or a group which forms a silanol group by hydrolysis and the radically polymerizable monomer having an isocyanate group. Further, according to EP 1 433 814 A1, it is particularly preferred that a monomer having at least three radically polymerizable groups should be contained as the high-hardness monomer in an amount of at least 5% by weight based on the total of all other radically polymerizable monomers. Further preferably, according to EP 1 433 814 A1, the radically polymerizable monomers include a radically polymerizable monomer having at least one epoxy group and at least one radically polymerizable group in the molecule besides the mentioned monomers classified by hardness. The durability of a photochromic compound and the adhesion of the photochromic coating can be improved by using the radically polymerizable monomer having at least one epoxy group. Radically polymerizable monomers having at least one epoxy group and at least one radically polymerizable group in the molecule are disclosed in EP 1 433 814 A1, page 13, paragraph [0101], to page 14, paragraph [0105]. According to EP 1 433 814 A1, the amount of the radically polymerizable monomer having at least one epoxy group and at least one radically polymerizable group in the molecule is preferably 0.01 to 30% by weight, particularly preferably 0.1 to 20% by weight based on the total of all other radically polymerizable monomers. The photochromic composition described in EP 1 433 814 A1 comprises at least one amine compound in an amount of 0.01 to 20 parts by weight based on 100 parts by weight of the total of all the radically polymerizable monomers in addition to the above mentioned radically polymerizable monomers. Examples for the at least one amine compound is given in EP 1 433 814 A1, page 14, paragraph [0108], to page 15, paragraph [0112]. The photochromic composition disclosed in EP 1 433 814 A1 comprises at least one photochromic compound in an amount of 0.01 to 20 parts by weight, preferably 0.05 to 15 parts by weight and more preferably 0.1 to 10 parts by weight based on 100 parts by weight of the total of all radically polymerizable monomers. Examples for photochromic compounds are given in EP 1 433 814 A1, page 15, paragraph [0114] to page 20, paragraph [0122].
EP 1 602 479 A1, in particular EP 1 602 479 A1, claim 9, discloses a photochromic composition comprising 100 parts by weight of a radically polymerizable monomer, 0.001 to 5 parts by weight of a silicone base or fluorine base surfactant and 0.01 to 20 parts by weight of a photochromic compound. According to EP 1 602 479 A1, the photochromic composition comprises a radically polymerizable monomer having a silanol group or a group which forms a silanol group by hydrolysis, an amine compound and a photochromic compound. The use amount of the radically polymerizable monomer having a silanol group or a group which forms a silanol group by hydrolysis is suitably 0.5 to 20% by weight, particularly 1 to 10% by weight based on the total weight of the whole coating agents. Other radically polymerizable monomers which according to EP 1 602 479 A1 can be used together with the radically polymerizable monomer having a silanol group or a group which forms a silanol group by hydrolysis, such as for example trimethylolpropane trimethacrylate, trimethylolpropane triacrylate, tetramethylolmethane trimethacrylate, tetramethylolmethane triacrylate, trimethylolpropane triethylene glycol triacrylate, pentaerythritol tetramethacrylate, dipentaerythritol hexaacrylate, urethane oligomer tetraacrylate, urethane oligomer hexamethacrylate, urethane oligomer hexaacrylate, polyester oligomer hexaacrylate, diethyleneglycol dimethacrylate, triethyleneglycol dimethacrylate, tetraethyleneglycol dimethacrylate, tripropireneglycol dimethacrylate, bisphenol A dimethacrylate, 2,2-bis(4-methacryloyloxyethoxydiphenyl)propane, glycidyl methacrylate, 2,2-bis(4-acryloyloxypolyethylene glycol phenyl)propane having an average molecular weight of 776 or methyl ether polyethylene glycol methacrylate having an average molecular weight of 475. The use amount of the other radically polymerizable monomers is suitably 20 to 90% by weight, particularly 40 to 80% by weight based on the weight of the whole coating agents. The use amount of the amine compound, such as triethanolamine, N-methyldiethanolamine, triisopropanolamine, N,N-dimethylaminoethyl methacrylate or N,N-diethylaminoethyl methacrylate for example, is suitably 0.01 to 15% by weight, particularly 0.1 to 10% by weight based on the weight of the whole coating agents. The use amount of the photochromic compound such as a naphthopyran derivative, a chromene derivative, a spirooxazine derivative, a spiropyran derivative or a flugimide derivative is suitably 0.1 to 30% by weight, particularly 1 to 10% by weight based on the weight of the whole coating agents.
To modify the at least one photochromic coating to exhibit an antifouling effect, an antibacterial effect and/or an antiviral effect, the at least one photochromic composition may comprise at least one additive mentioned in connection with the at least one hard coating composition, preferably in the amount mentioned there.
In case the edged lens or spectacle lens comprises at least one photochromic coating, optionally modified, the edged lens or the spectacle lens may optionally comprise at least one photochromic primer, preferably underneath and preferably directly adjacent to the at least one photochromic coating. The at least one photochromic primer may comprise the polyurethane resin layer disclosed in EP 1 602 479 A1, in particular in EP 1 602 479 A1, claim 1, or the primer layer disclosed in
WO 03/058300 A1, in particular in WO 03/058300 A1, page 22, line 3 to page 23, line 13. The at least one photochromic primer resin or the at least one primer layer each may be modified analogously to the at least one primer composition to exhibit an antifouling effect, an antibacterial effect and/or an antiviral effect, as described above. The at least one photochromic primer, optionally modified, may be applied to the uncoated or precoated edge surface without application of at least one photochromic coating.

In one embodiment the spectacle lens comprising a spectacle lens substrate and at least one coating is obtained by an additive manufacturing method, preferably by ink jet printing. In this embodiment the spectacle lens substrate as well as at least one coating is obtainable by an additive manufacturing method, preferably by ink jet printing. When the spectacle lens substrate is obtained by inkjet printing, the final size and shape, optionally with the desired edge form, is realizable by the positioning of the ink jet voxels. Preferably no additional profiling is necessary to obtain the required final size and shape of the spectacle lens substrate. Dependent on the desired edge form an additional profiling step may be necessary. Preferably the coating directly adjacent to the edge surface, the coating directly adjacent to the front surface and the coating directly adjacent to the back surface each of the spectacle lens substrate is applied by an additive manufacturing method as well, preferably by ink jet printing. The fluid usable in ink jet printing may be based on at least one hybrid system as described in EP20151152.4. The fluid preferably is based on a thiol-ene-(meth)acrylate hybrid system, an epoxythiol-(meth)acrylate hybrid system or an epoxy(meth)acrylate hybrid system, each hybrid system being described in detail in EP20151152.4. Further preferably, the fluid is based on a hybrid system comprising at least one photolatent base, in particular an epoxy thiol hybrid system, an epoxythiol-thiol/ene hybrid system or an epoxythiol-(meth)acrylate hybrid system, each hybrid system comprising at least one photolatent base and each hybrid system being described in detail in EP20151152.4.

In one embodiment, the front surface and/or the back surface of an edged lens or a spectacle lens comprises at least one modified coating. The at least one modified coating may cover the directly adjacent coating underneath completely or partially. A partial covering may be in any arbitrary shape of islands.
In one embodiment, the spectacle frame may comprise at least one additive effective against fouling, bacteria or viruses. In that case the spectacle frame, optionally in combination with at least one of the modified coatings described above and/or in combination with the at least one antibacterial and/or antiviral coating described above, may prevent the spread and growth of microorganisms on a spectacle. Such an interaction between an antifouling, antibacterial and/or antiviral spectacle frame and at least one of the modified coatings and/or the at least one antibacterial and/or antiviral coating on the spectacle lens is especially advantageous in-between the edged lens and the spectacle frame, preferably to directly prevent the growth of microorganisms in difficult accessible parts for cleaning of the spectacle. Spectacle frames made of metal are preferably coated with at least one of the modified coatings and/or the at least one antibacterial and/or antiviral coating. Spectacle frames made of polymeric materials can be coated with at least one of the modified coatings and/or the at least one antibacterial and/or antiviral coating but preferably the at least one antifouling, antibacterial and/or antiviral additive is mixed into the polymer composition of the spectacle frame. Half-rim spectacle frames require a Nylor thread which can be treated like described for polymeric spectacle frames. Preferentially the Nylor thread is functionalized by the at least one antifouling, antibacterial and/or antiviral additive in the polymer composition.

Summarizing, the following embodiments are particularly preferred within the scope of the present invention:
Embodiment 1: Spectacle lens comprising a spectacle lens substrate and at least one coating, the spectacle lens substrate comprising an uncoated or precoated front surface, the front surface intended to be fitted away from the eye, an uncoated or precoated back surface, the back surface intended to be fitted nearer to the eye and an uncoated or precoated edge surface, wherein at least the uncoated or precoated edge surface comprises at least one hard coating, the at least one hard coating optionally being modified to exhibit an antifouling effect, an antibacterial effect and/or an antiviral effect.
Embodiment 2: Spectacle lens according to embodiment 1, wherein at least the uncoated or precoated edge surface comprises at least one primer coating, the at least one primer coating optionally being modified to exhibit an antifouling effect, an antibacterial effect and/or an antiviral effect.
Embodiment 3: Spectacle lens according to any one of the preceding embodiments, wherein at least the uncoated or precoated edge surface comprises at least one primer coating and at least one hard coating, the at least one primer coating and/or the at least one hard coating each optionally being modified to exhibit an antifouling effect, an antibacterial effect and/or an antiviral effect, the at least one hard coating being the outermost coating thereof.
Embodiment 4: Spectacle lens according to any one of the preceding embodiments, wherein at least the uncoated or precoated edge surface comprises at least one hard coating and at least one clean coat layer, the at least one hard coating and/or the at least one clean coat layer each optionally being modified to exhibit an antifouling effect, an antibacterial effect and/or an antiviral effect, the at least one clean coat layer being the outermost coating thereof.
Embodiment 5: Spectacle lens according to any one of the preceding embodiments, wherein at least the uncoated or precoated edge surface comprises at least one hard coating and at least one anti-fog coating, the at least one hard coating and/or the at least one anti-fog coating each optionally being modified to exhibit an antifouling effect, an antibacterial effect and/or an antiviral effect, the at least one anti-fog coating being the outermost coating thereof.
Embodiment 6: Spectacle lens according to any one of the preceding embodiments, wherein at least the uncoated or precoated edge surface comprises at least one hard coating, at least one anti-fog coating and at least one clean coat layer, the at least one hard coating, the at least one anti-fog coating and/or the at least one clean coat layer each optionally being modified to exhibit an antifouling effect, an antibacterial effect and/or an antiviral effect, the at least one hard coating being the coating next to the surface to be coated and the at least one clean coat layer being the outermost surface thereof.
Embodiment 7: Spectacle lens according to any one of the preceding embodiments, wherein at least the uncoated or precoated edge surface comprises at least one mirror, the at least one mirror coating being a semitransparent coating.
Embodiment 8: Spectacle lens according to any one of the preceding embodiments, wherein at least the uncoated or precoated edge surface comprises at least one antireflective coating, the at least one antireflective coating optionally being modified to exhibit an antifouling effect, an antibacterial effect and/or an antiviral effect.
Embodiment 9: Spectacle lens according to any one of the preceding embodiments, wherein at least the uncoated or precoated edge surface comprises at least one antibacterial and/or antiviral coating.
Embodiment 10: Spectacle lens comprising a spectacle lens substrate and at least one coating, the spectacle lens substrate comprising an uncoated or precoated front surface, an uncoated or precoated back surface and an uncoated or precoated edge surface, wherein at least the uncoated or precoated edge surface comprises at least one mirror coating.
Embodiment 11: Spectacle lens comprising a spectacle lens substrate and at least one coating, the spectacle lens comprising uncoated or precoated front surface, an uncoated or precoated back surface and an uncoated or precoated edge surface, wherein at least the uncoated or precoated edge surface comprises at least one antireflective coating, the antireflective coating optionally being modified to exhibit an antifouling effect, an antibacterial effect and/or an antiviral effect.
Embodiment 12: Spectacle lens comprising a spectacle lens substrate and at least one coating, the spectacle lens comprising an uncoated or precoated front surface, an uncoated or precoated back surface and an uncoated or precoated edge surface, wherein at least the uncoated or precoated edge surface comprises at least one antibacterial and/or antiviral coating.

The following examples are non-limiting for the scope of the invention:

### I Spectacle lens according to the examples

### Examples 1 to 3:

Spectacle lenses based on ADC with -2.00dpt were coated on the front surface and on the back surface with the hard coating according to EP 2 578 649 A1, example 2 as well as with the antireflective coating according to EP 2 801 846 A1, paragraph [0056]. Afterwards the spectacle lenses were edged to circular shape.

The hard coating composition according to EP 2 578 649 A1, example 2 was modified according to table 2 below with three different concentrations of 4,5-dichloro-2-octyl-isothiazolone (Sigma-Aldrich) as the active biocide component. The 4,5-dichloro-2-octyl-isothiazolone was added to the hard coating composition at room temperature and stirred until it was fully dissolved. The so modified hard coating composition was brushed on the edge surface of the edged lens which was subsequently cured in an oven at 70°C for 30minutes. 1mL of an overnight culture of E. coli was mixed with LB agar (lysogeny broth) at elevated temperature of 40°C. After filling this culture medium in petri dishes and after cooling of the culture medium, the edged lenses were positioned within the culture medium with full contact of the edge surface to the culture medium. The petri dishes were incubated for 24h at 37°C.

**Table 2:**

| Example | target mass% of 4,5-dichloro-2-octyl-isothiazolone in solid content of modified hard coating composition | weight of 4,5-dichloro-2-octyl-isothiazolone [g] in modified hard coating composition |
|---|---|---|
| 1 | 1% | 0,065 |
| 2 | 0.1% | 0,006 |
| 3 | 0.01% | 0,0007 |

The edged lenses according to the examples 1 to 3 showed after visual inspection next to the respective edge surface no growth of E. coli on the LB agar medium.

## Claims

1. Edged lens comprising a spectacle lens substrate and at least one coating, **characterized in that**
- the edge surface comprises at least one coating being identical to at least one coating of the front surface and/or to at least one coating of the back surface or
- the edge surface comprises at least one coating being a modified coating of at least one coating of the front surface and/or of the back surface.

2. Edged lens according to claim 1, **characterized in that** the edge surface comprises at least one coating directly adjacent to or overlapping with at least one coating of the front surface and/or at least one coating of the back surface.

3. Edged lens according to any one of the preceding claims, **characterized in that** the edge surface comprises at least one coating improving the durability and/or long-term stability thereof.

4. Edged lens according to any one of the preceding claims, **characterized in that** the edge surface and the front surface and/or the back surface each comprises at least one coating selected from the group consisting of at least one primer coating, at least one hard coating, at least one antireflective coating, at least one mirror coating, at least one clean coat layer, at least one anti-fog coating, at least one antibacterial and/or antiviral coating and at least one photochromic coating.

5. Edged lens according to any one of the preceding claims, **characterized in that** the modified coating comprises at least one additive and/or at least one biocidal component each conferring an antifouling effect, an antibacterial effect and/or antiviral effect to the at least one coating being modified therewith.

6. Edged lens according to any one of the preceding claims, **characterized in that** the at least one additive is selected from the group consisting of at least one metal, at least one metal oxide, at least one metal hydroxide, at least one metal oxide hydrate, at least one metal salt, at least one metal sulfide, at least one coordination complex effective as antifouling agent, as antibacterial and/or as antiviral agent and at least one organic component effective as antifouling agent, as antibacterial and/or as antiviral agent.

7. Edged lens according to any one of claims 5 or 6, **characterized in that** the at least one additive and/or at least one biocidal component each is composed of or comprises silver, zinc, copper, titanium, boron, alloys thereof, oxides, hydroxides, and/or salts thereof.

8. Edged lens according to any one of the preceding claims, **characterized in that** the at least one hard coating is based on a hard coating composition comprising
A.
a) at least one silane derivative of the formula (III) R¹R²₃₋ₙSi(OR³)ₙ, wherein R¹ comprises an alkyl group, a cyclo alkyl group, an acyl group, an aryl group or a hetero aryl group, each of which may be substituted, R² is an organic rest comprising an epoxide group, R³ comprises an alkyl group, a cyclo alkyl group, an aryl group or a hetero aryl group, each of which may be substituted, n = 2 or 3, and/or
b) at least one hydrolysis product of the silane derivative of the formula (III), and/or
c) at least one condensation product of the silane derivative of the formula (III), and/or
d) any mixture of components a) to c);
B. at least one colloidal inorganic oxide, hydroxide, oxide hydrate, fluoride and/or oxyfluoride;
C. at least one epoxy component comprising at least two epoxy groups; and
D. at least one catalyst system comprising at least one Lewis acid and at least one thermolatent Lewis base-adduct.

9. Edged lens according to any one of the preceding claims, **characterized in that** the edge surface comprises at least two coatings, at least one coating thereof being identical to at least one coating of the front surface and/or to at least one coating of the back surface and/or at least one coating thereof being a modified coating of at least one coating of the front surface and/or of the back surface.

10. Method for manufacturing an edged lens comprising a spectacle lens substrate and at least one coating, **characterized in that** the method comprises the following steps:
- Providing an uncut lens comprising an uncoated or precoated front surface and an uncoated or precoated back surface;
- Edging the uncut lens resulting in an edged lens;
- Coating the edge surface with at least one coating composition, the at least one coating composition resulting in an identical coating to at least one coating of the front surface and/or at least one coating of the back surface or the at least one coating composition being a modified coating composition resulting in a modified coating of at least one coating of the front surface and/or of the back surface.

11. Method according to claim 10, **characterized in that** the modified coating composition comprises at least one additive and/or at least one biocidal component conferring an antifouling effect, an antibacterial effect and/or an antimicrobial effect to the at least one coating resulting therefrom.

12. Method according to any one of claims 10 or 11, **characterized in that** the edge surface is coated with at least one coating composition resulting in at least one primer coating, in at least one hard coating, in at least one antireflective coating, in at least one mirror coating, in at least one clean coating, in at least one anti-fog coating, in at least one antibacterial and/or anti-fog coating and/or in at least one photochromic coating.

13. Method according to any one of claims 10 to 12, **characterized in that** the edge surface is coated with at least one primer composition and/or at least one hard coating composition and cured by the application of at least one single electromagnetic pulse.

14. Method according to claim 13, **characterized in that** the total process duration for curing the at least one primer composition and/or the at least one hard coating composition is within a range of from 3 seconds to 10 minutes.

15. Method according to any one of claims 10 to 12, **characterized in that** the edge surface is coated with at least one coating deposited under vacuum.
